(19) Europäisches Patentamt
European Patent Office
Office européen des brevets

(11) **EP 0 496 000 B1**

(12) **EUROPEAN PATENT SPECIFICATION**

(45) Date of publication and mention
of the grant of the patent:
**12.06.1996 Bulletin 1996/24**

(21) Application number: **91914223.2**

(22) Date of filing: **09.08.1991**

(51) Int Cl.6: **H04N 11/04**, H04N 11/08, H04N 11/10

(86) International application number:
**PCT/JP91/01068**

(87) International publication number:
**WO 92/03020 (20.02.1992 Gazette 1992/05)**

(54) **CIRCUIT FOR SAMPLING COMPONENT SIGNALS AND REGENERATING CIRCUIT**

SCHALTUNG ZUR ABTASTUNG VON KOMPONENTSIGNALEN UND SCHALTUNG ZUR WIEDERGEWINNUNG

CIRCUIT POUR ECHANTILLONNER DES SIGNAUX COMPOSANTS ET CIRCUIT REGENERATEUR DE CES SIGNAUX

(84) Designated Contracting States:
**DE ES FR GB IT NL**

(30) Priority: **10.08.1990 JP 211873/90**

(43) Date of publication of application:
**29.07.1992 Bulletin 1992/31**

(73) Proprietor: **FUJITSU LIMITED**
**Kawasaki-shi, Kanagawa 211 (JP)**

(72) Inventor: **OKAZAKI, Takeshi, Junes Shuwa 202**
**Kanagawa 211 (JP)**

(74) Representative: **Lehn, Werner, Dipl.-Ing. et al**
**Hoffmann, Eitle & Partner,**
**Patentanwälte,**
**Postfach 81 04 20**
**81904 München (DE)**

(56) References cited:
**EP-A- 0 309 875**   **JP-A- 0 178 595**
**JP-A- 0 181 593**   **US-A- 4 531 149**

## Description

### TECHNICAL FIELD

The present invention relates to a component signal sampling circuit and a reproducing circuit, and particularly to a component signal sampling circuit and a reproducing circuit used in a coding transmission unit or signal processing unit for parallel coding or processing a component signal in an image signal or the like.

Recently, in the field of image processing apparatuses such as a VTR, DVE (Digital Video Effect) or the like used in a high efficiency coding unit of an image signal or a broadcasting, for the purpose of highly efficient signal processing or obtaining a high quality image, a converting circuit and a reproducing circuit are necessary wherein image signals are separately sampled which comprise analog components of luminance and chrominance signals such as (Y, C1, C2), (Y, R-Y, B-Y), (Y, Pr, Pb), (Y, I, Q), or the like; the sampled signal is converted to a digital signal and the converted signal is reproduced.

### BACKGROUND ART

#### First Conventional Example

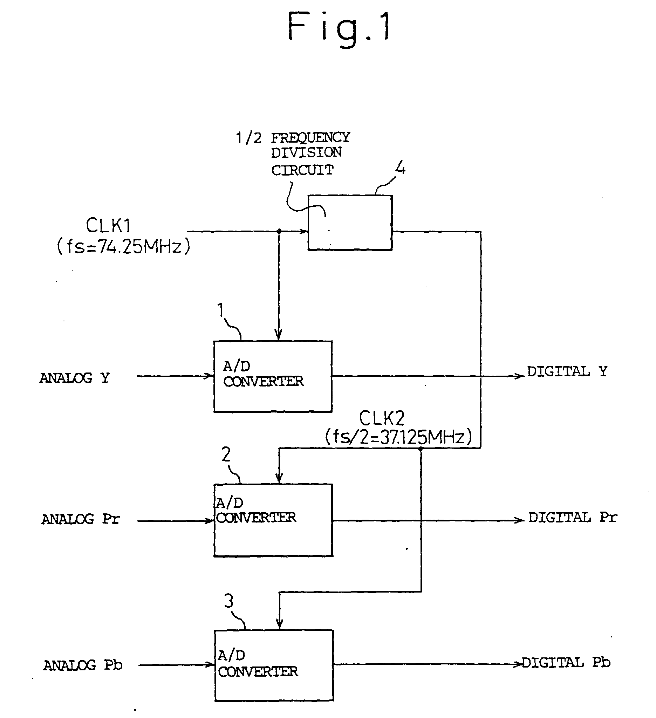

Figure 1 shows a first conventional example of a conventional component signal sampling circuit. A first input analog component signal is a Y signal (e.g., a luminance signal of a HDTV (High Definition Television) signal), second and third input analog component signals are a Pr signal and a Pb signal (chrominance signals), respectively, and a sampling frequency fs is 74.25 MHz.

In the figure, 1 denotes an A/D converter for generating a Y signal sampled by a clock CLK1 having a sampling frequency of 74.25 MHz and made to digital data, 4 denotes a 1/2 frequency division circuit for dividing the sampling frequency of 74.25 MHz by 2, 2 and 3 denote A/D converters for sampling the Pr signal and the Pb signal by a clock CLK2 having a sampling frequency of 37.125 MHz from the 1/2 frequency division circuit 4, respectively, and for generating the digitized Pr and Pb signals.

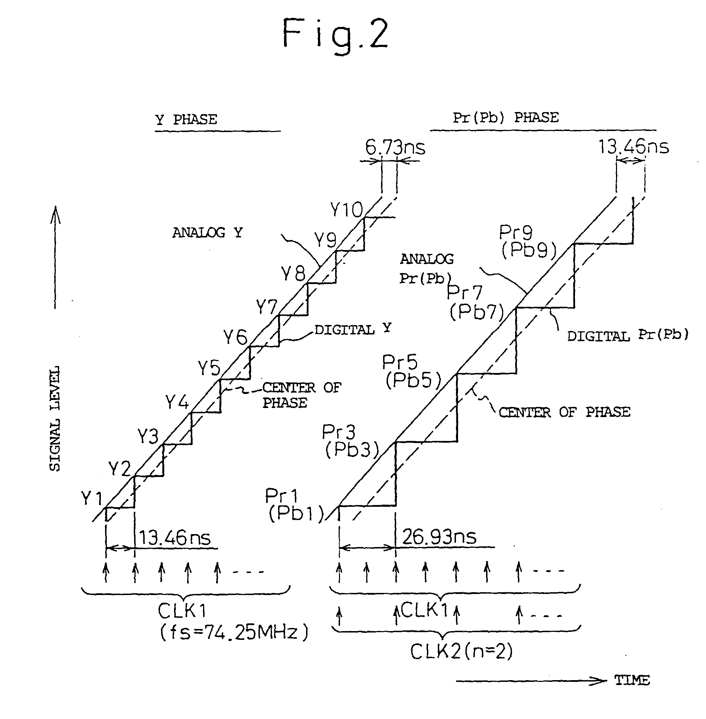

In the above operation of the first conventional example, as shown in a phase diagram of the sampled digital data in Fig. 2, first, the Y signal input is sampled in each time slot (13.46ns) of the clock CLK1 by the first A/D converter 1, and signal levels $Y_1$, $Y_2$, $Y_3$, $Y_4$, $Y_5$, ... are obtained. The level is sampled and held during the term of a one time slot, and a stepped digitized Y signal output is obtained as shown in the figure.

Next, the Pr signal input is sampled in each time slot (26.93ns) of the clock CLK2 by the second A/D converter 2, and the signal levels $Pr_1$, $Pr_3$, $Pr_5$, ... corresponding to the signal levels of the Y signal input level $Y_1$, $Y_3$, $Y_5$, ... are obtained, respectively. Then, during the term of a respective one time slot, the level is fixed, and similarly the stepped digitized Pr signal output shown in the figure can be obtained. In the case of the Pb signal, these are the same.

Also, as is clear by the figure, a center of phase (hereinafter shown by a broken line that designates a mean phase obtained after smoothing of the stepped digital data output) of the digital data output of the Y signal is given as a general equation 1/(2fs) to the Y signal input, and the digital data output of a Pr(Pb) signal similarly is given by a general equation n/(2fs) to the Pr(Pb) signal input, respectively, (where n is a division rate of the frequency division circuit and a positive integer other than one).

Accordingly, the center of phase of the digitized Y signal output in this case is 1/(2fs) = 6.73ns, and the center of phase of the digitized Pr (Pb) signal output is n/(2fs) = 2/(2fs) = 13.46ns.

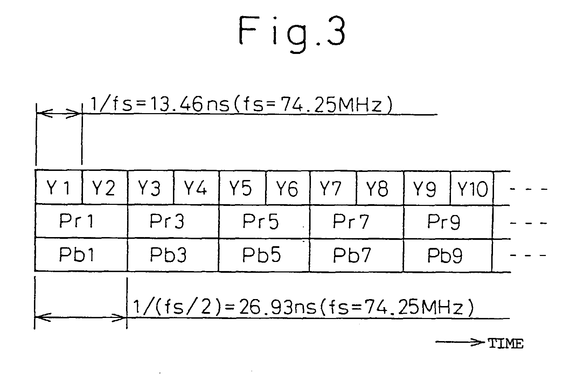

In Fig. 3, the respective timing charts after sampling in each component signal are shown. For example, the signal level $Pr_1$ of the Pr signal coincides with the signal level $Y_1$ of the Y signal in the sampled phase, and coincides with the signal level $Y_2$. The signal levels $Pr_3$, $Pr_5$ and signal levels $Pb_1$, $Pb_3$, $Pb_5$, ... of the Pb signal, are the same.

#### Second Conventional Example

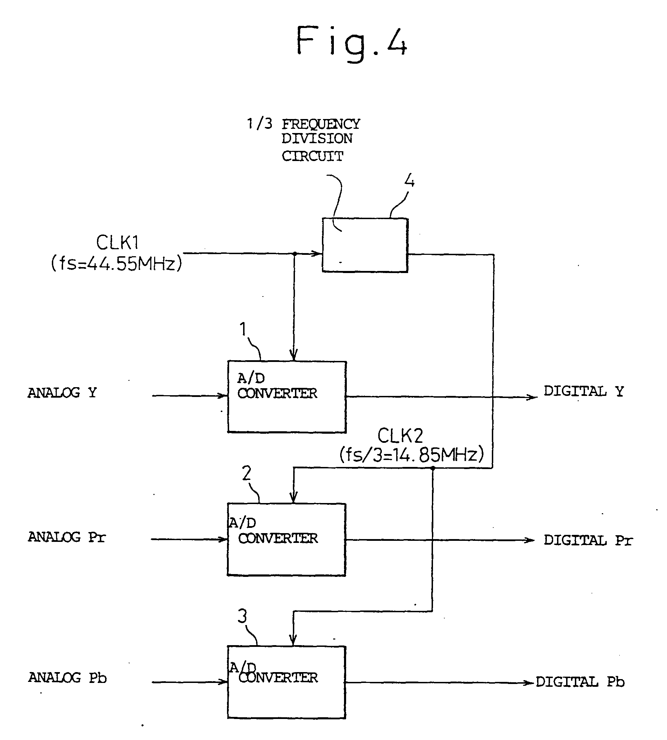

In Fig. 4, a second conventional example of the conventional component signal sampling circuit is shown. A basic constitution and the signal input is the same as that of the first conventional example in Fig. 1, except that the sampling frequency fs is 44.55 MHz and n = 3.

In this case, the clock CLK1 is the sampling frequency fs, i.e., 44.55 MHz, and the clock CLK 2 is 14.85 MHz, which is an output of a 1/3 frequency division circuit 4, dividing the sampling frequency fs, i.e., 44.55 MHz by 3.

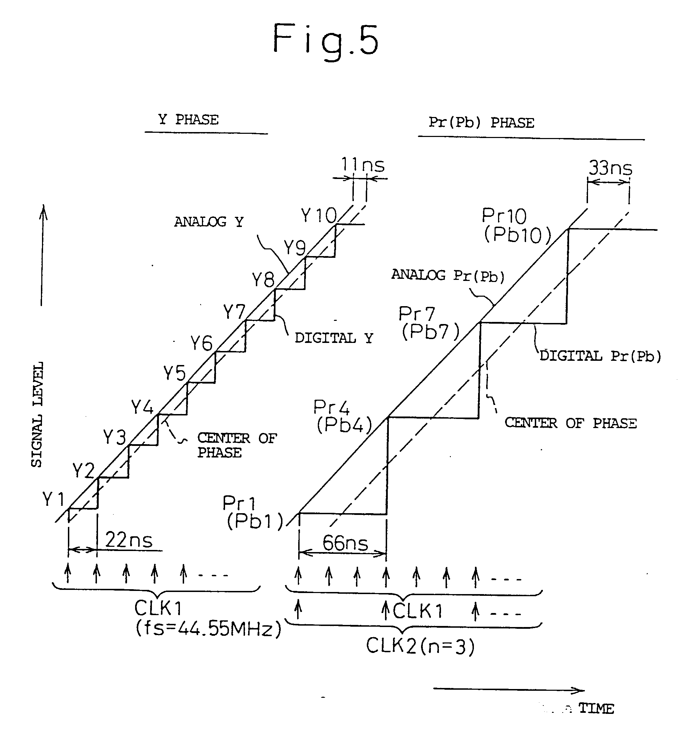

In the operation of the second conventional example, as shown in a phase diagram of the sampling digital data in Fig. 5, first, the Y signal input is sampled in each time slot (22ns) of the clock CLK1 by the first A/D converter 1, processed the same as the first conventional example, and the stepped digitized Y signal output as shown in the figure is obtained.

The Pr signal input is sampled in each time slot (66ns) of the clock CLK2 by the second A/D converter 2, and a stepped digitized Pr signal output (signal level $Pr_1$, $Pr_4$, $Pr_7$, ...) corresponding to the signal level $Y_1$, $Y_4$, $Y_7$, ... of the Y signal input, respectively, can be obtained.

The center of phase of the digitized Y signal output in this case is 1/(2fs) = llns, and the center of phase of the digitized Pr(Pb) signal output is n/(2fs) = 33ns.

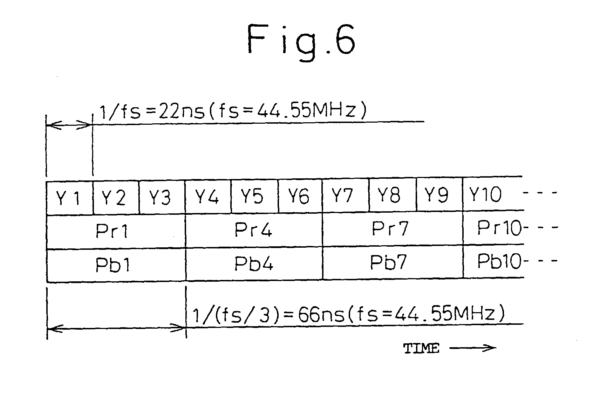

In Fig. 6, the respective timing charts after sampling in each component signal are shown. For example, the signal level $Pr_1$ of the Pr signal coincides with the signal level $Y_1$ of the Y signal in a sampling phase, and coincides with the signal level $Y_2$ and $Y_3$. Also, the signal level $Pr_4$, $Pr_7$, ... and the signal level $Pb_1$, $Pb_4$, $Pb_7$, ... of the Pb signal, are the same.

Third Conventional ExamDle

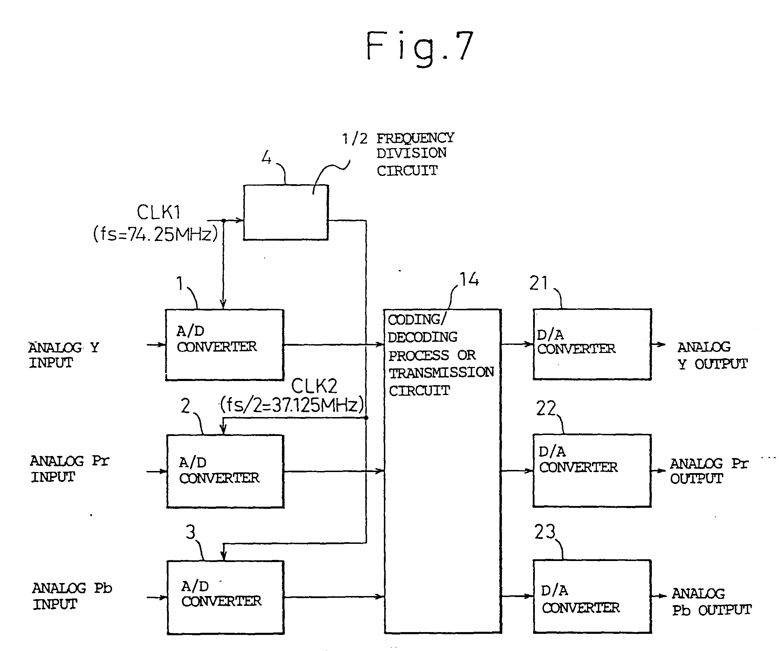

In Fig. 7, a third conventional example of the conventional component signal sampling circuit is shown. Similar to the first conventional example, the Y signal (e.g., luminance signal of HDTV signal) is sampled by the sampling frequency fs = 74.25 MHz in the first A/D converter 1, as a first input analog component signal. The respective Pr signal and Pb signal (chrominance signal) as second and third input analog component signals are sampled by the sampling frequency fs/2 = 37.125 MHz in the second A/D converter 2 and the third A/D converter 3, the respective first to third digital data output from the A/D converters 1 to 3 executes a coding process or transmission, and the analog component signals Y, Pr, and Pb are output from the first to third D/A converter, respectively.

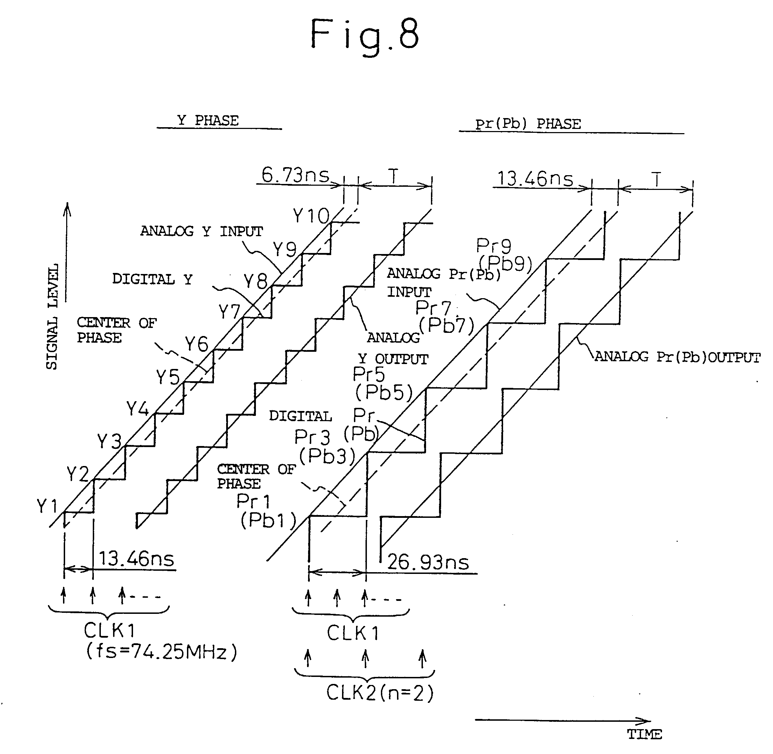

In Fig. 8, the relationship of the phases among each input component signal, each sampling data, and each output component signal is shown. The first to third digital data, which has the same phase as in Fig. 2, are output as an analog component signal Y, Pr, and Pb after a certain time (T), respectively.

Accordingly, the delayed value of the output analog component signal Y to the input analog component signal Y is 1/(2fs) + T = 6.73ns + T, and the delayed value of the output analog component signal Pr(Pb) to the input analog component signal Pr(Pb) is n/(2fs) + T = 2/(2fs) + T = 13.46ns + T.

In the above conventional component signal sampling circuit, because the first and second (and third) component signals having a phase identical to each other are sampled by the different sampling frequency fs and fs/n at the same sampling phase as the respective component signal phase, a phase difference between the general equation n/(2fs) designating a center of phase of the second (and third) digital data output and a general equation 1/(2fs) designating a center of phase of the first digital data output, namely, the phase difference {n/(2fs)} - {1/(2fs)} = (n-1)/2(fs) occurs, between the digitized first and second (and third) component signal. (Hereinafter the above phase difference is defined as $\Delta$t.)

For example, in the first conventional example wherein the sampling frequency fs is 74.25 MHz and n = 2, the phase difference (n-1)/(2fs) = 6.73ns is generated and in the second conventional example wherein the sampling frequency fs is 44.55 MHz and n = 3, the phase difference (n-1)/(2fs) = 22ns is generated.

In the third conventional example, the phase difference (n-1)/(2fs) = 6.73ns is generated between the output component signals.

As a result, the phase difference between the respective digitized component signals or between the output component signals, which are generated by the sampling of the respective analog component signals, can result in a lower resolution of the reproducing image (double images), a lower sharpness of the edge portion, color shift, or the like.

DISCLOSURE OF THE INVENTION

Accordingly, an object of the invention is to realize a component signal sampling circuit and a reproducing circuit wherein if first and second (and third) component signals having a phase identical to each other are sampled by the different sampling frequencies fs and fs/n, the phase difference between the first and second (or third) component signals is not generated, (namely, the phase difference preceedingly can be corrected).

In the present invention, it is hoped that when two kinds or three kinds of the first and second (and third) component signals are sampled by the respective different sampling frequencies fs and fs/n, if the sampling phase of the sampling frequency fs/n is precedingly delayed by phase difference $\Delta$t to the sampling phase of the sampling frequency fs, the phase difference is corrected and the phase difference between the respective component signals becomes zero.

Below, various aspects of the invention executed in consideration of the above are explained.

First Aspect of the Invention

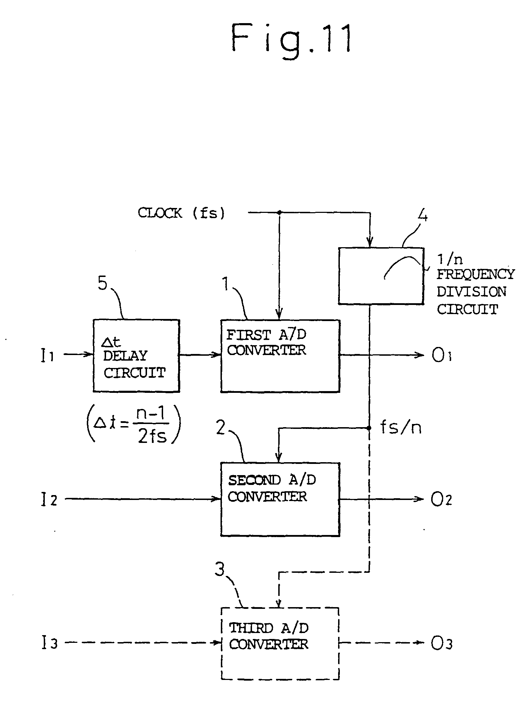

In a component signal sampling circuit according to a first aspect of the invention, as shown schematically in Fig. 11, the circuit comprises a first A/D converter 1 for sampling a first analog component signal $I_1$ by a clock having a sampling frequency fs and for generating a first digital data $0_1$; a 1/n frequency division circuit 4 for frequency dividing the clock of the sampling frequency fs by n (n is a positive integer other than 1); a second A/D converter 2 for sampling a second analog component signal $I_2$ being the same phase as the first analog component signal $I_1$ by an output clock fs/n from the 1/n frequency division circuit 4 and for generating a second digital data $O_2$, and a $\Delta$t delay circuit 5 for delaying a phase of the first analog component signal $I_1$ by a time $\Delta$t = (n-1)/(2fs) at the input side of the first A/D converter 1.

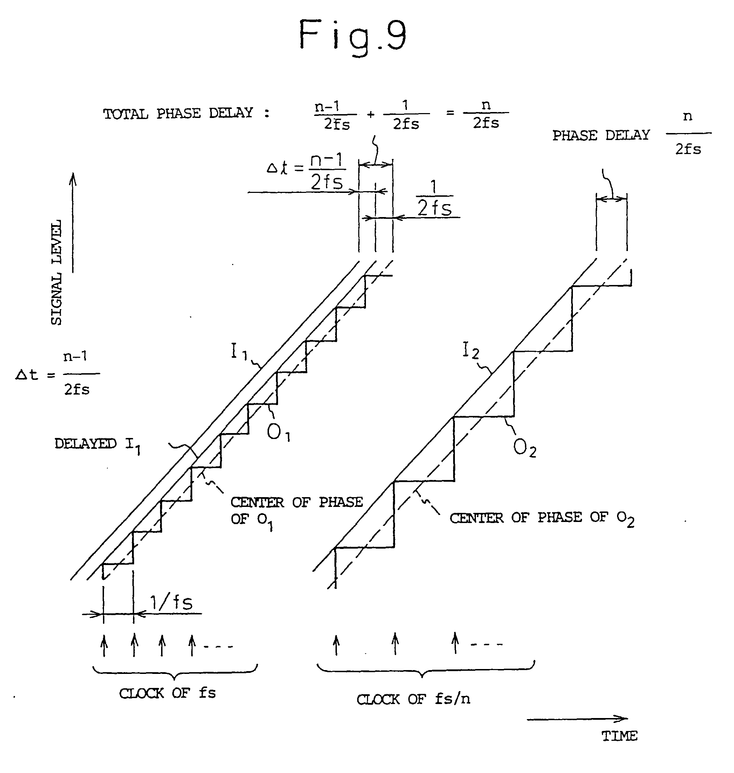

Next, a phase difference correction according to the first aspect of the invention is explained with reference to an explanatory diagram shown in Fig. 9.

Namely, the first analog component signal $I_1$ is sampled by the clock of the sampling frequency fs in the first A/D converter 1 at the phase delayed state by $\Delta$t by the $\Delta$t delayed circuit 5, and thus the obtained center of phase of the first digital data $O_1$ adds the $\Delta$t to the general equation 1/(2fs) of the conventional center of phase and becomes

$${1/(2fs)} + \Delta t = {1/(2fs)} + {(n-1)/(2fs)} = n/(2fs).$$

Further, the second analog component signal $I_2$ is sampled similarly by the clock of the sampling frequency fs/n in the second A/D converter 2, at that time the sampling phase of the sampling frequency fs/n is sampled delayed by $\Delta t$ to the sampling phase of the sampling frequency fs, as a result, the second digital data $O_2$ is obtained. The center of phase similar to a conventional circuit is designated the general equation of the center of phase n/(2fs), and coincides with the center of phase value of the first digital data $O_1$. Thus, the phase difference between the first and second output digital data $O_1$ and $O_2$ does not occur.

Further, in the invention as shown by the broken line in Fig. 11, the third A/D converter 3 is provided and the third analog component signal $I_3$, which is the same phase as the first and second analog component signals $I_1$ and $I_2$, is sampled by the output clock fs/n from the 1/n frequency division circuit 4 and the phase difference corrected third digital data $O_3$ is obtained. Thus, the above-mentioned digitized luminance and chrominance signal of the image signal can be obtained.

Second Aspect of the Invention

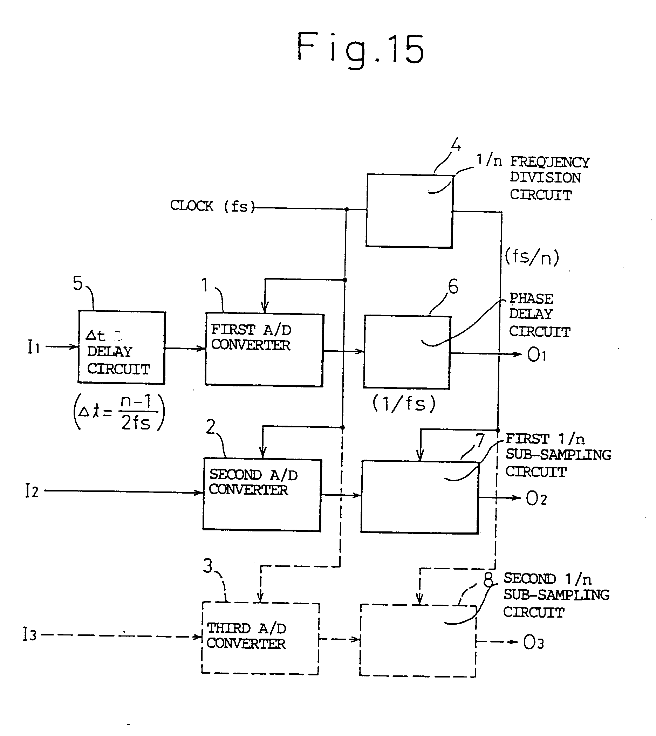

A component signal sampling circuit according to a second aspect of the invention, as shown schematically in Fig. 15, comprises a first A/D converter 1 for sampling a first analog component signal $I_1$ by a clock of a sampling frequency fs, and for generating first digital data; a $\Delta t$ delay circuit 5 for delaying a phase of a first analog component signal $I_1$ by a time $\Delta t = (n-1)/(2fs)$ at an input side of the first A/D converter 1; a 1/n frequency division circuit 4 for dividing a clock of the sampling frequency fs by n (n is a positive integer other than 1); a second A/D converter 2 for sampling a second analog component signal in in the same phase as the first analog component signal $I_1$ by the clock of the sampling frequency fs, and for generating second digital data; a phase delay circuit 6 for delaying an output phase of the first A/D converter 1 by 1/fs, and for outputting a first digital data $O_1$ at an output side of the first A/D converter 1; and a first 1/n sub-sampling circuit 7 for sub-sampling an output of the second A/D converter 2 by an output clock fs/n from the 1/n frequency division circuit 4, and for generating second digital data $O_2$.

Next, a phase difference correction according to the second aspect of the invention is explained with reference to Fig. 9.

The first analog component signal $I_1$ similar to the first aspect of the invention is sampled in the first A/D converter 1, further delays the phase by 1/fs by the phase delay circuit 6, and the first digital data $O_1$ is obtained. The center of phase of the data, as shown in Fig. 9, corresponds to a center of phase delaying the first digital data $O_1$ further by 1/fs, namely, $\Delta t + \{1/(2fs)\} + (1/fs) = \{(n-1)/(2fs)\} + \{1/(2fs)\} + (1/fs) = (n+2)/(2fs)$.

On the other hand, the second analog component signal $I_2$ is sampled by a clock of the sampling frequency fs in the second A/D converter 2 (center of phase 1/(2fs)), and then, immediately it is 1/n sub-sampled by the first 1/n sub-sampling circuit 7, thus the output of the second A/D converter 2, as a result, is delayed by n/(2fs).

It is 1/n sub-sampled by the output clock fs/n from the 1/n frequency division circuit 4 in the first 1/n sub-sampling circuit 7, and is delayed in phase by one time slot of the sampling frequency fs, i.e., 1/fs, then the second digital data $O_2$ is obtained. The center of phase corresponds to the center of phase delaying the second digital data output $O_2$ shown in Fig. 9 furhter by 1/fs, namely $\{n/(2fs)\} + (1/fs) = (n+2)/(2fs)$, and it coincides with the center of phase of the first digital data $O_1$. Whereby it is understood that the phase difference between the first and second output digital data, $O_1$ and $O_2$, respectively, is not generated.

Also, in the invention as shown by the broken line in Fig. 15, the third A/D converter 3 and the second 1/n sub-sampling circuit 8 are further provided, and they are sampled and sub-sampled by the clock of the sampling frequency fs and the output clock fs/n from the 1/n frequency division circuit 4, respectively, the third analog component signal $I_3$ is sampled and the third digital data $O_3$, in which the phase difference is corrected, is obtained. As a result, the above-mentioned luminance and chrominance signal of the image signal can be digitized.

Third Aspect of the Invention

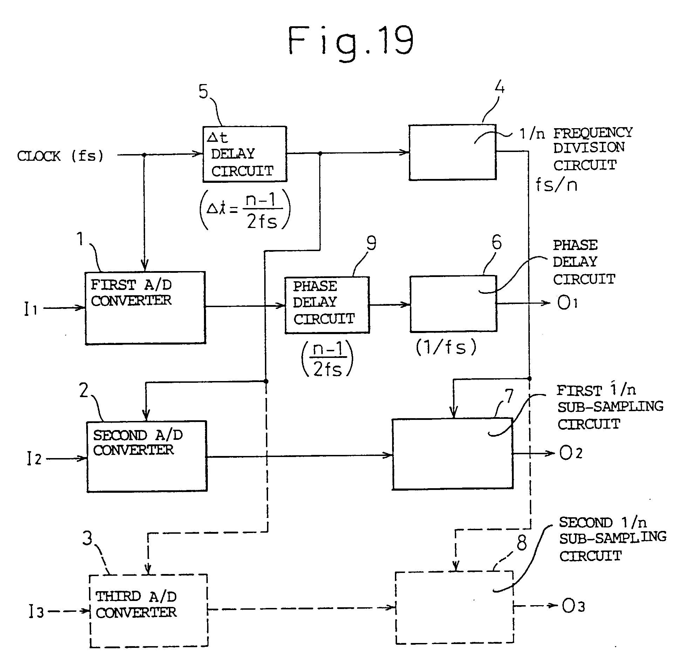

A component signal sampling circuit according to the third aspect of the invention, as shown schematically in Fig. 19, comprises a first A/D converter 1 for sampling a first analog component signal $I_1$ by a clock of a sampling frequency fs and for generating a first digital data; a $\Delta t$ delay circuit 5 for delaying the clock of the sampling frequency fs by a time $\Delta t = (n-1)/(2fs)$; a 1/n frequency division circuit 4 for frequency dividing an output of the $\Delta t$ delay circuit 5 by n (n is a positive integer other than 1); a second A/D converter 2 for sampling a second analog component signal $I_2$ in the same phase as the first analog component signal $I_1$ by an output from the $\Delta t$ delay circuit 5 and for generating a second digital data; a phase delay circuit 9 for delaying an output phase by (n-1)/(2fs) at the output side of the first A/D converter 1; a phase delay circuit 6 for delaying an output of the phase delay circuit 9 by 1/fs and for outputting the first digital data $O_1$; a first 1/n sub-sampling circuit 7 for sub-sampling an output of the second A/D converter 2 by an output clock from the 1/n frequency division circuit 4 and for generating the second digital data $O_2$.

The phase difference correction according to the third aspect of the invention is similarly explained with reference to Fig. 9.

The first analog component signal $I_1$ is directly sampled by the clock of the sampling frequency fs in the first A/D converter 1, the phase is delayed by (n-1)/(2fs) by the phase delay circuit 9, further the phase is delayed by 1/fs by the phase delay circuit 6, and the first digital data $O_1$ is obtained. In this case, since it is considered that the phase delay $\Delta t$ by the $\Delta t$ delay circuit 5 according to the second aspect (Fig. 15) of the invention is replaced with the phase delay $(n-1)/(2fs)$ by the phase delay circuit 9 according to the third aspect of the invention, the center of phase of the first digital data $O_1$ corresponds to the center of the phase further delaying the first digital data $O_1$ by 1/fs as shown in Fig. 9 similar to the second aspect of the invention and is $(n+2)/(2fs)$.

The second analog component signal $I_2$ is sampled by the clock of the sampling frequency fs delaying the phase by $\Delta t$ by the $\Delta t$ delay circuit 5 in the second A/D converter 2, further 1/n sub-sampled by the first 1/n sub-sampling circuit 7 similar to the second aspect of the invention, and the second digital data $O_2$ delaying the phase by 1/fs is obtained. Also, the center of phase corresponds to the center of phase delaying the second digital data output $O_2$ further by 1/fs as shown in Fig. 9 and similar to the second aspect of the invention, is $(n+2)/(2fs)$ and coincides with the center of phase of the first digital data $O_1$. Thus, the phase difference between the first output digital data $O_1$ and the second output digital data $O_2$ is not generated.

In the third aspect of the invention, as shown by a broken line in Fig. 19, the third A/D converter 3 and the second 1/n sub-sampling circuit 8 are further provided, sampled and sub-sampled by the clock of the sampling frequency fs delaying the phase by $\Delta t$ by the $\Delta t$ delay circuit 5 and the output clock fs/n from the 1/n frequency division circuit 4, respectively, and the third digital data $O_3$ correcting the phase difference by a sampling of the third analog component signal $I_3$ is obtained. Thus, the above digitization of the luminance and chrominance signal of the image signal can be carried out.

## Fourth Aspect of the Invention

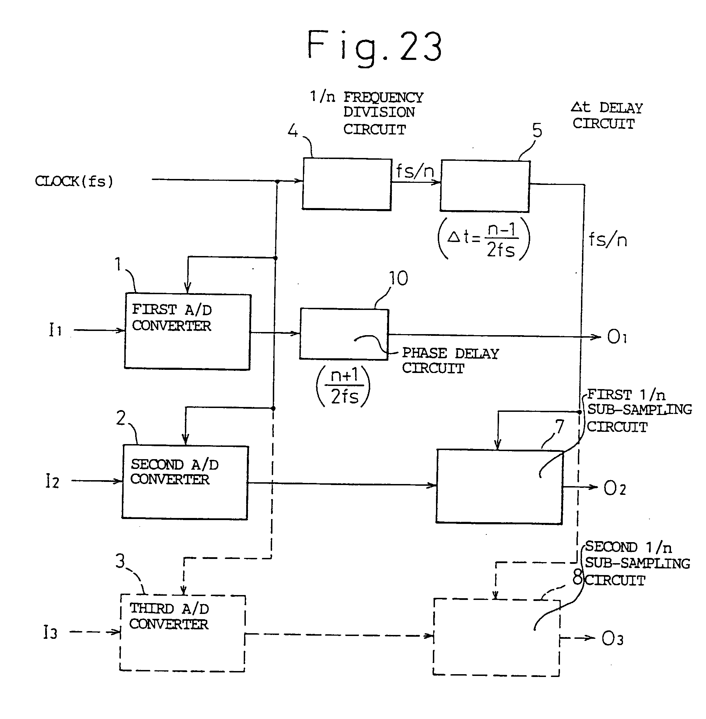

A component signal sampling circuit according to a fourth aspect of the invention, as shown schematically in Fig. 23, comprises a first A/D converter 1 for sampling a first analog component signal $I_1$ by a clock of a sampling frequency fs, and for generating a first digital data; a 1/n frequency division circuit 4 for dividing a clock of the sampling frequency fs by n (n is a positive integer other than 1); a $\Delta t$ delay circuit 5 for delaying a phase of an output clock fs/n of the 1/n frequency division circuit 4 by $\Delta t = (n-1)/(2fs)$; a phase delay circuit 10 for delaying an output phase of the first A/D converter 1 by $(n+1)/(2fs)$ at the output side of the first A/D converter 1, and for outputting first digital data $O_1$; a second A/D converter 2 for sampling a second analog component signal $I_2$ in the same phase as the first analog component signal $I_1$ by the clock of the sampling frequency fs, and for generating a second digital data; a first 1/n sub-sampling circuit 7 for sub-sampling the output of the second A/D converter 2 by the output clock fs/n from the $\Delta t$ delay circuit 5, and for generating the second digital data

$O_2$.

Next, an operation of the phase difference correction in the forth aspect of the invention is similarly explained with reference to Fig. 9.

The first analog component signal $I_1$ is directly sampled by the clock of the sampling frequency fs in the first A/D converter 1, the phase is delayed by $(n+1)/(2fs)$ by the phase delay circuit 10, and the first digital data $O_1$ is obtained. Therefore, in this state, the center of phase corresponds to the phase delayed by $(n+1)/(2fs)$ from the general equation $1/(2fs)$ showing a center of phase of a first digital data output $O_1$ in the conventional example. This is equivalent to the center of phase in the second aspect of the invention, which is delayed further by 1/fs from the center of phase $n/(2fs)$ of the digital data output $O_1$ according to the first aspect of the invention delayed by $\Delta t$ from the center of phase $1/(2fs)$ in the conventional example. As a result, the center of phase is $(n+2)/(2fs)$, the same as the second aspect of the invention.

The second analog component signal $I_2$ is processed and sampled similar to the second aspect of the invention in the second A/D converter 2, is immediately sub-sampled by the output clock fs/n from the 1/n frequency division circuit 4 phase delayed by $\Delta t$ by the $\Delta t$ delay circuit 5 in the first 1/n sub-sampling circuit 7, and the second digital data $O_2$ phase delayed by a one time slot of the sampling frequency fs, i.e., 1/fs is obtained. This center of phase also corresponds to a delayed second digital data output $O_2$ further by 1/fs similar to the second aspect of the invention; the center of phase becomes $(n+2)/(2fs)$ and coincides with the center of phase of the first digital data $O_1$. Therefore, it is known that the phase difference between the first output digital data $O_1$ and the second output digital data $O_2$ is not generated.

Also in the fourth aspect of the invention, as shown by a broken line in Fig. 23, the third A/D converter 3 and the second 1/n sub-sampling circuit 8 are further provided, sampled and sub-sampled by the clock of the sampling frequency fs and the output clock fs/n from the 1/n frequency division circuit 4 phase delayed by $\Delta t$, respectively, and as a result, the third analog component signal $I_3$ is sampled and the third digital data $O_3$, the phase difference of which is corrected, is obtained. Then, as mentioned above, the digitization of the luminance and chrominance signal of the image signal can be carried out.

Thus, precedingly by shifting sampling phase by the phase difference $\Delta t$, i.e., $(n-1)/(2fs)$ which is generated when a plurality of component signals are sampled by the different sampling frequency, the phase difference between the digitized component signals is corrected.

## Fifth Aspect of the Invention

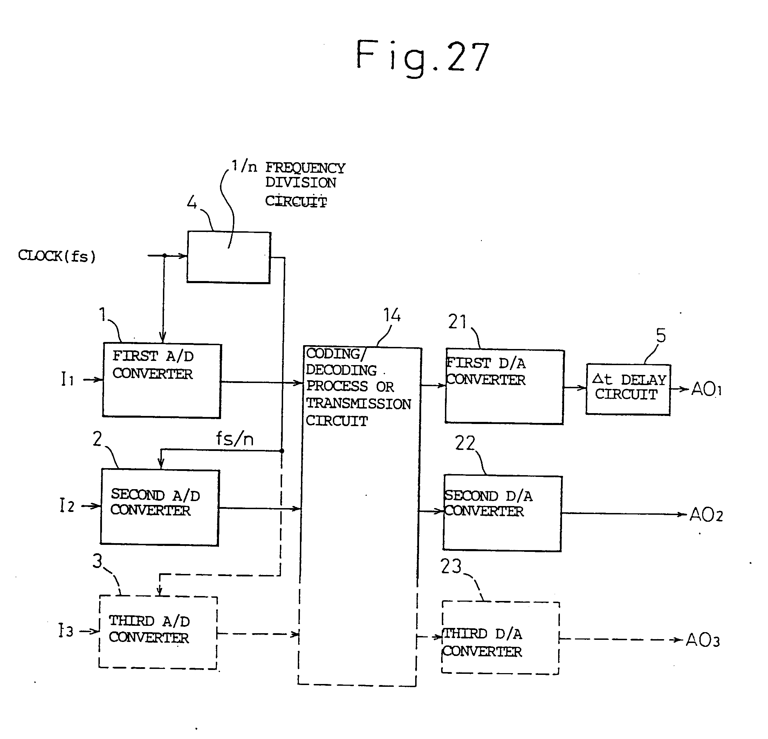

A component signal sampling circuit according to a fifth aspect of the invention, as shown schematically in Fig. 27, comprises a first A/D converter 1 for sampling a first analog component signal $I_1$ by a clock of a sampling frequency fs, and for generating first digital data; a 1/n frequency division circuit 4 for dividing a clock of the sampling frequency fs by n (n is a positive integer other than 1); a second A/D converter 2 for sampling a second analog component signal $I_2$ in the same phase as the first analog component signal $I_1$ by an output clock fs/n from the 1/n frequency division circuit 4, and for generating second digital data; a first D/A converter 21 for receiving the output of the first A/D converter 1 through a coding/decoding process or transmission circuit 14, and for outputting an analog signal; a $\Delta t$ delay circuit 5 for receiving an output of the first D/A converter 21, for delaying a phase by time $\Delta t = (n-1)/2fs$, and for outputting a first analog component signal $AO_1$; a second D/A converter 22 for receiving an output of the second A/D converter 2 through the coding/decoding process or transmission circuit 14, and for outputting a second analog component $AO_2$.

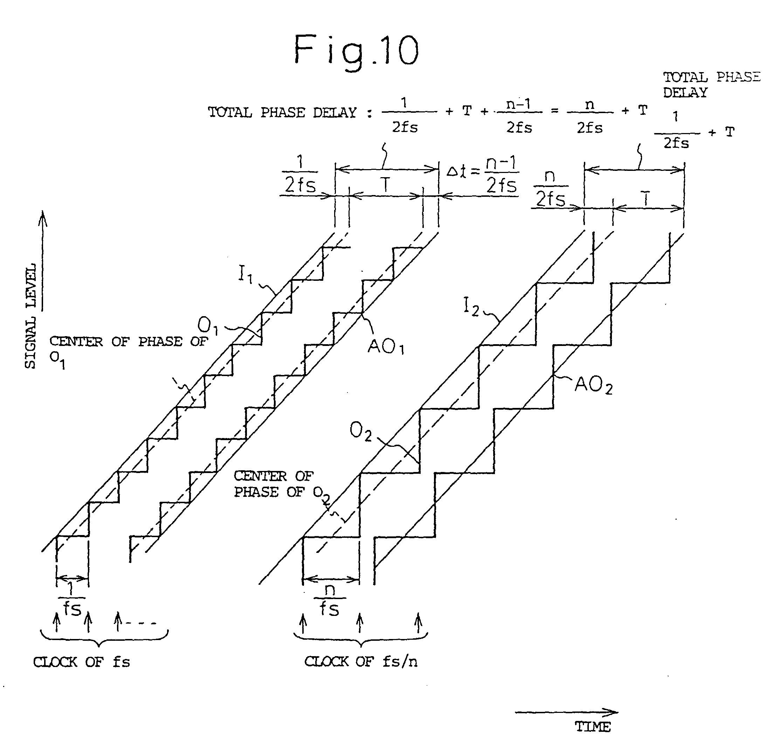

A phase difference correction according to the fifth aspect of the invention is explained with reference to an explanatory diagram in Fig. 10.

Namely, the first analog component signal $I_1$ is sampled in the first A/D converter 1 similar to the first aspect of the invention, delayed by constant time (delay time T) by the coding/decoding process or transmission circuit, D/A converted by the first D/A converter 21, and further delayed by the time $\Delta t = (n-1)/(2fs)$ by $\Delta t$ delay circuit 5, to become the first output analog component signal $AO_1$.

On the other hand, the second analog component signal $I_2$ is sampled by a clock of a sampling frequency fs/2 in the second A/D converter 2, delayed by a constant time (delay time T) by the coding/decoding process or transmission circuit, and D/A converted by the second D/A converter 22 to become the second analog component signal $AO_2$.

As a result, the first output analog component signal $AO_1$ is delayed in phase by $1/(2fs) + T + \Delta t = 1/(2fs) + T + (n-1)/(2fs) = n/(2fs) + T = 1/(fs) + T = 13.46ns + T$ to the first analog component signal $I_1$. Also, the second output analog component signal $AO_2$ is delayed in phase by $1/fs + T = 13.46ns + T$ to the second analog component signal $I_2$, and coincides with the first output analog component signal $AO_1$ in the phase delayed. The phase difference between the first output analog component signal $AO_1$ and the second output analog component signal $AO_2$ is not generated.

In the fifth aspect in the invention, as shown by a broken line in Fig. 27, further a third A/D converter 3 and a third D/A converter 23 are provided. In the third A/D converter 3, the third analog component signal $I_3$ having the same phase as the first analog component signal $I_1$ and the second analog component signal $I_2$ is sampled by the output clock fs/n from the 1/n frequency division circuit 4. And the third output analog component signal $AO_3$, corrected in the phase difference, is obtained.

Thus the reproduction of the above-mentioned luminance and chrominance signal of an image signal can be carried out.

BRIEF EXPLANATION OF DRAWINGS

Figure 1 is a block diagram of a component signal sampling circuit as a first conventional example;
Fig. 2 is a diagram explaining a relationship among signal phases in the conventional example of Fig. 1;
Fig. 3 is a diagram showing a timing chart of the signals in a conventional example of Fig. 1;
Fig. 4 is a block diagram of a component signal sampling circuit in a second conventional example;
Fig. 5 is a diagram explaining a relationship among signal phases in the conventional example of Fig. 4.
Fig. 6 is a diagram showing a timing chart of signals in the conventional example of Fig. 4;
Fig. 7 is a block diagram of a component signal sampling and reproducing circuit in a third conventional example;
Fig. 8 is a diagram explaining a relationship among signal phases in the conventional example of Fig. 7;
Fig. 9 is a diagram explaining a phase difference correction of a component signal sampling circuit according to the invention;
Fig. 10 is a diagram explaining a phase difference correction of a component signal sampling and reproducing circuit according to the invention;
Fig. 11 is a schematic block diagram of a component signal sampling circuit according to a first embodiment of the invention;
Fig. 12 is a block diagram of the circuit of Fig. 11;
Fig. 13 is a diagram showing a timing chart of the circuit of Fig. 11;
Fig. 14 is a diagram explaining a relationship among phases of signals in the circuit of Fig. 11;
Fig. 15 is a schematic block diagram of a component signal sampling circuit according to a second embodiment of the invention;
Fig. 16 is a block diagram of the circuit of Fig. 15;
Fig. 17 is a diagram showing a timing chart of the circuit of Fig. 15;
Fig. 18 is a diagram explaining a relationship among phases of signals of the circuit of Fig. 15;
Fig. 19 is a schematic block diagram of a component signal sampling circuit according to a third embodiment of the invention;
Fig. 20 is a block diagram of the circuit of Fig. 19;
Fig. 21 is a diagram showing a timing chart of the circuit of Fig. 19;
Fig. 22 is a diagram explaining a relationship among phases of signals of the circuit of Fig. 19;
Fig. 23 is a schematic block diagram of a component signal sampling circuit according to a fourth embodiment of the invention;
Fig. 24 is a block diagram of the circuit of Fig. 23;
Fig. 25 is a diagram showing a timing chart of the circuit of Fig. 23;

Fig. 26 is a diagram explaining a relationship among phases of signals of the circuit of Fig. 23;

Fig. 27 is a schematic block diagram of a component signal sampling and reproducing circuit according to a fifth embodiment of the invention;

Fig. 28 is a block diagram of the circuit of Fig. 27;

Fig. 29 is a diagram showing a timing chart of the circuit of Fig. 27;

Fig. 30 is a diagram explaining a relationship among phases of signals of the circuit of Fig. 27.

BEST MODE FOR CARRYING OUT THE INVENTION

The embodiments corresponding to the first to fifth aspects of the invention, respectively, wherein three input analog component signals are provided, are explained as follows.

First Embodiment

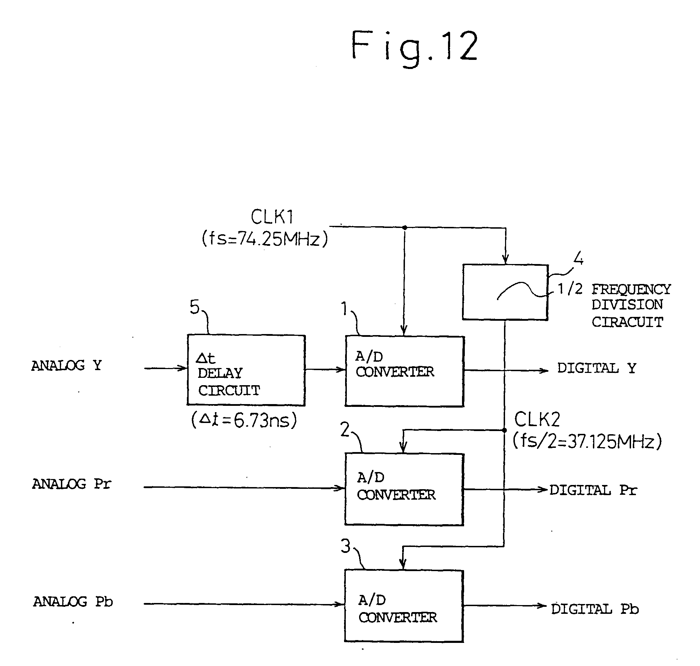

Figure 12 is a diagram showing a first embodiment of a component signal sampling circuit according to the invention. Input analog component signals are Y, Pr, Pb type in the HDTV signal the same as the conventional examples, and a sampling frequency fs is 74.25 MHz and n = 2.

In the figure, 5 denotes $\Delta t$ delay circuit provided at the input side of an A/D converter 1 and delaying phase by $\Delta t$, and the other constitutions and conditions are the same as the first conventional example shown in Fig. 1 and the explanation is abbreviated.

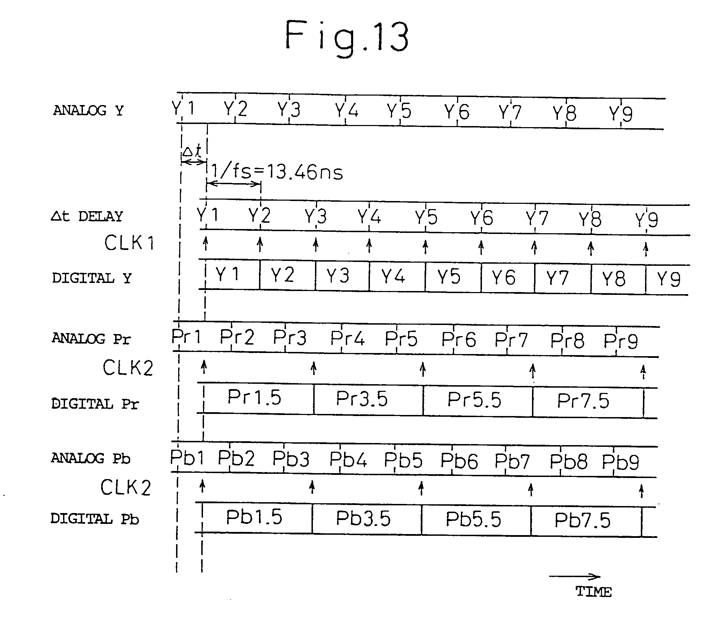

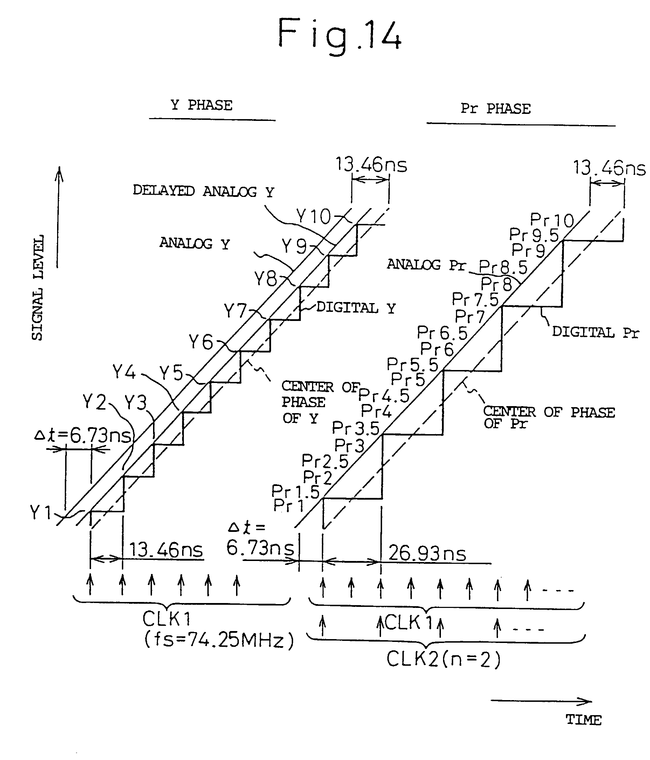

An operation in this condition is explained with reference to a timing chart shown in Fig. 13 and a diagram showing a relationship among phases of sampling digital data shown in Fig. 14.

A Y signal input is delayed by $\Delta t = 6.73$ns by the $\Delta t$ delay circuit 5, sampled by a clock CLK1 in the A/D converter 1, and a stepwise digitized Y signal output, which comprises signal level $Y_1$, $Y_2$, $Y_3$, ... and shown in the figure, is obtained.

A Pr signal input is input into an A/D converter 2, sampled by a clock CLK2, which is the same phase as the clock CLK1 and is frequency divided by 2 similar to the first conventional example, and a stepwise digitized Pr signal output comprising signals $Pr_{1.5}$, $Pr_{3.5}$, $Pr_{5.5}$ ..., the level of which is intermediate as shown by the figure, is obtained. At this time, the sampling phase of the clock CLK2 is delayed by $\Delta t = 6.73$ns from the sampling phase of the clock CLK1.

A center of phases of the digitized Y signal output and the digitized Pr signal output in this case are both $n/(2fs) = 13.46$ns, and the phase difference following sampling is corrected.

Further, in this embodiment, the $\Delta t$ delay circuit 5 provided at the input side of the A/D converter 1 may be provided at the output side of the A/D converter 1 so that after the conversion, the phase difference is corrected, and an output phase of the component is constructed to coincide.

Similarly, in a Pb signal, the same processing in phase as the Pr signal is carried out, and the stepwise digitized output is obtained, however, in Fig. 14, for the convenience of simplifying the figure, the drawing is abbreviated.

Second Embodiment

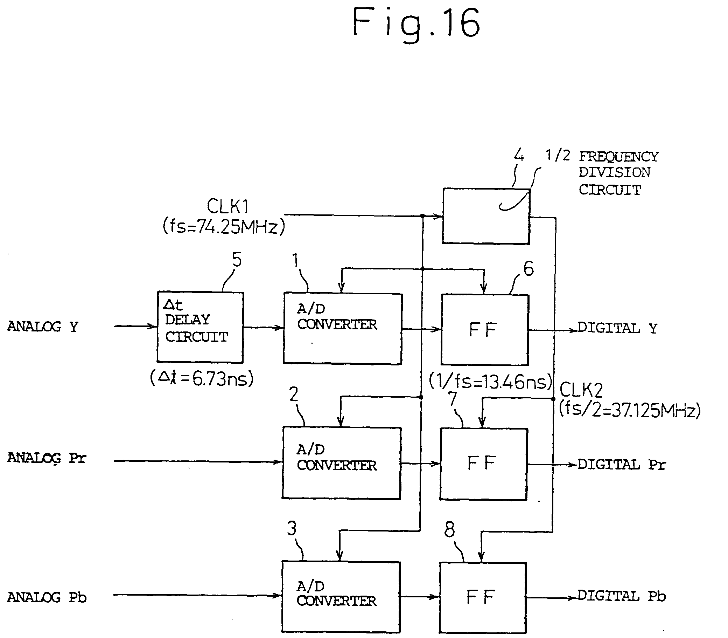

Figure 16 is a diagram showing a second embodiment of a component signal sampling circuit according to the invention. The conditions of an input signal, a sampling frequency fs and an integer n are the same as those in the first embodiment shown in Fig. 12.

In the figure, 6 denotes a flip-flop (FF) provided at the output side of the A/D converter 1 for delaying the phase of the output by 1/fs as a phase delay circuit, 7 and 8 are provided at output sides of an A/D converter 2 and an A/D converter 3, and show flip-flops as a 1/2 sub-sampling circuit that sub-sample the respective output by an output clock CLK2 from a 1/2 frequency division circuit 4, and the other construction is the same as the first embodiment shown in Fig. 12 and thus the explanation is abbreviated.

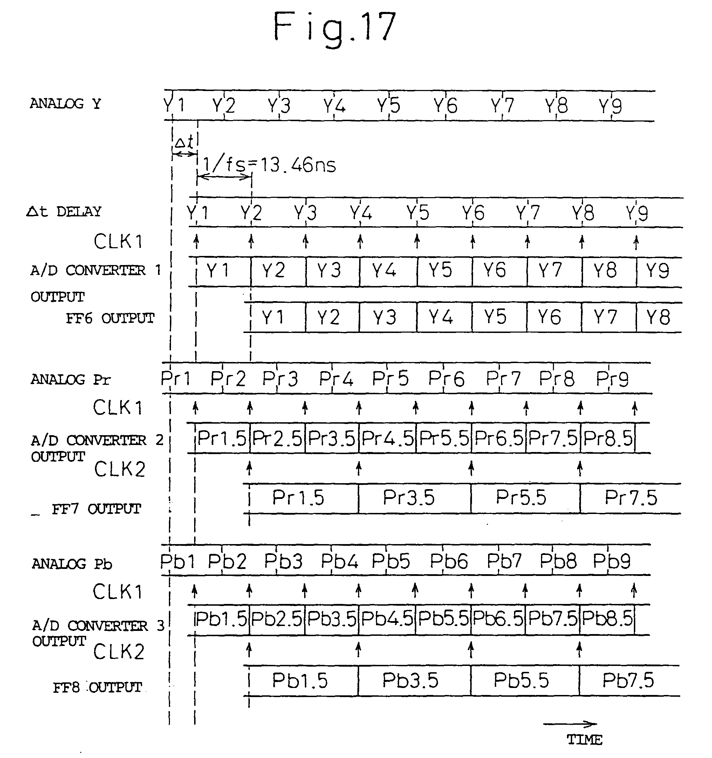

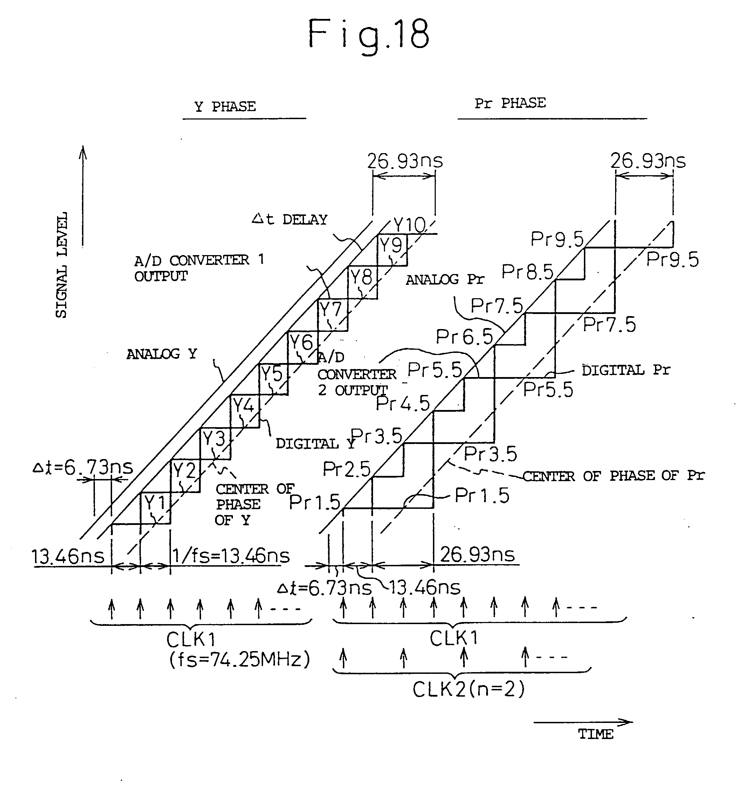

An operation in this case is explained with reference to the operation timing chart shown in Fig. 17, a diagram showing a relationship among phases of sampling digital data shown in Fig. 18, and the first embodiment.

A Y signal input is processed the same as the first embodiment, is sampled by a clock CLK1 in the A/D converter 1, delays the phase by 1/fs = 13.46ns by a flip-flop FF6, and a Y signal output, which comprises signals $Y_1$, $Y_2$, $Y_3$, ... and stepwise digitized as shown in the figure, is obtained.

Also, the Pr signal input is sampled by the clock CLK1 instead of the clock CLK2 in the A/D converter 2, and the stepwise digital data output, which comprises signal levels $Pr_{1.5}$, $Pr_{2.5}$, $Pr_{3.5}$, $Pr_{4.5}$, $Pr_{5.5}$, ... as shown in the figure, can be obtained. Moreover, it is sub-sampled by 1/2 by the clock CLK2 in the flip-flop FF7, the phase is delayed by one time slot of the clock CLK1, i. e., 1/fs = 13.46ns, and the stepwise digitized Pr signal output which comprises signal levels $Pr_{1.5}$, $Pr_{3.5}$, $Pr_{5.5}$, ..., as shown in the figure, can be obtained.

In this case, the center of phases of the digitized Y signal output and the digitized Pr signal output are both $(n+2)/(2fs) = 26.93$ns, and the phase difference following the sampling is corrected.

In addition, in the embodiment, the $\Delta t$ phase delay circuit 5 provided at the input side of the A/D converter 1 may be provided between the A/D converter 1 and the flip-flop FF6, and thus at an after step the phase difference may be corrected and the output phase of the component may be coincided.

## Third Embodiment

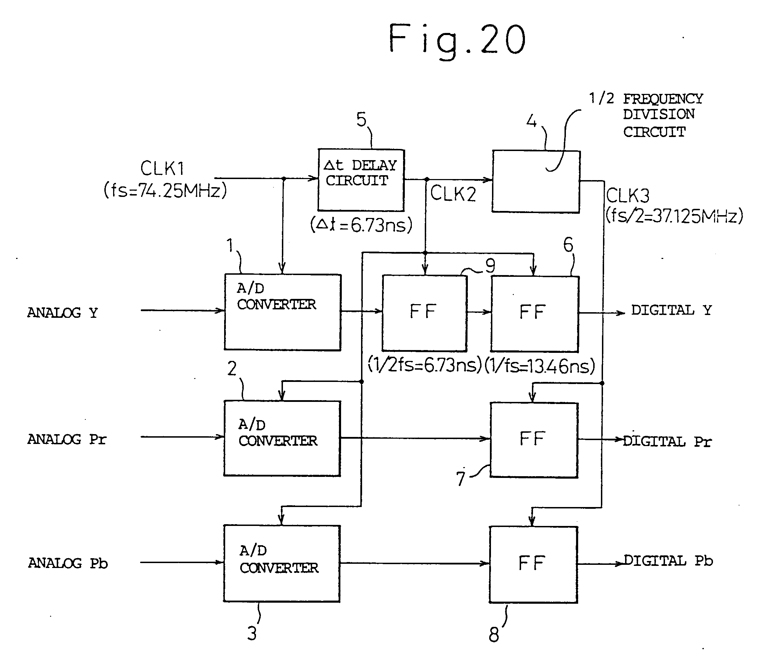

Figure 20 is a diagram showing a third embodiment of a component signal sampling circuit according to the invention, and conditions of input signals, a sampling frequency fs, and an integer n are the same as those of the first embodiment shown in Fig. 12.

In the figure, 5 denotes a $\Delta t$ delay circuit provided at the input side of a 1/2 frequency division circuit 4, for delaying a phase of a clock CLK1 by $\Delta t$, and for outputting a clock CLK2, 9 denotes a flip-flop as a phase delay circuit provided at the outside of an A/D converter 1, for delaying the output phase by $(n-1)/(2fs)$, and the 1/2 frequency division circuit 4 frequency divides the clock CLK2 by 2 to form a clock CLK3 (37.125 MHz). The other constitutions are the same as those of the second embodiment in Fig. 16, and accordingly the explanation is abbreviated.

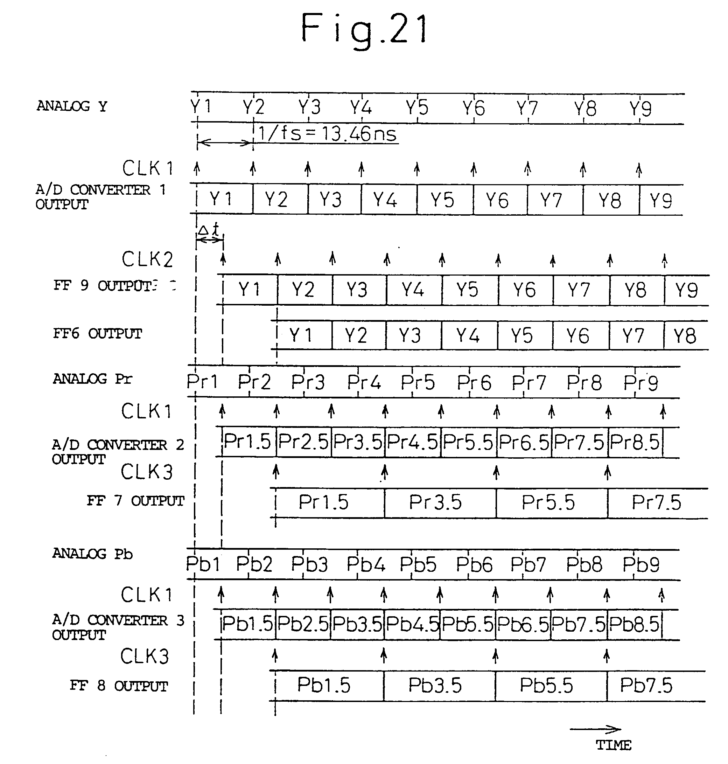

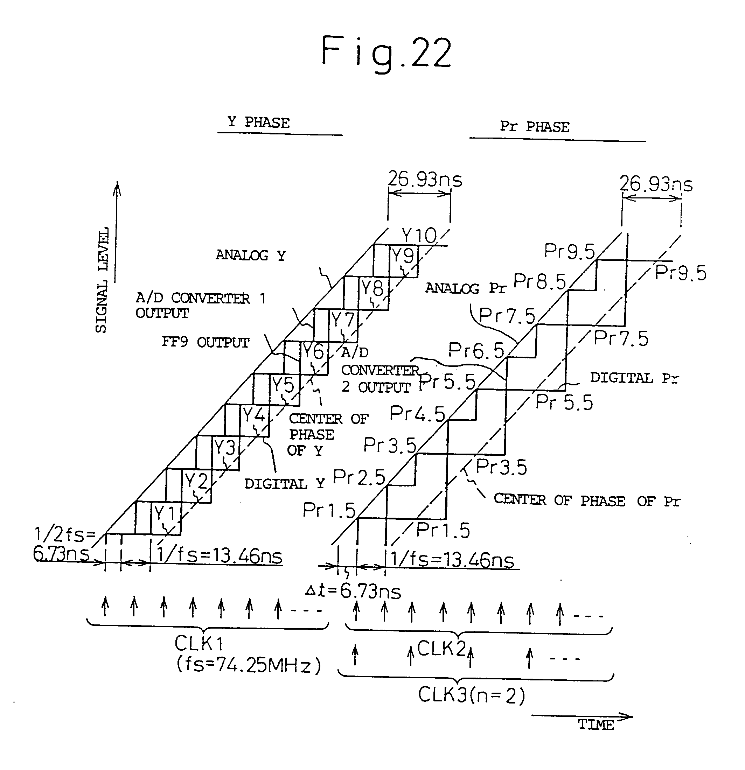

An operation in this case is explained with reference to a timing chart shown in Fig. 21, a diagram showing a relationship among phases of sampling digital data shown in Fig. 22, and the second embodiment.

A Y signal input is directly sampled without the $\Delta t$ delay circuit 5 by the clock CLK1 in the A/D converter 1, further the phase thereof is delayed by $1/(2fs) = 6.73ns$ by a flip-flop FF9, further the delayed phase is delayed in phase by the flip-flop FF6 similar to the second embodiment, and a stepwise digitized Y signal output, which comprises signal levels $Y_1$, $Y_2$, $Y_3$ ..., as shown in the figure, is obtained.

A Pr signal input is sampled by a clock CLK2 delaying the phase of the clock CLK1 by $\Delta t = 6.73ns$ instead of the clock CLK1 in a A/D converter 2, is processed the same as the second embodiment, and the stepwise digitized Pr signal output comprising signal levels $Pr_{1.5}$, $Pr_{3.5}$, $Pr_{5.5}$, ..., as shown in the figure, is obtained. At this time, the flip-flop FF7 sub-samples by a clock CLK3 instead of the clock CLK2.

The center of phases of the digitized Y signal output and the digitized Pr signal output both become 26.93ns similar to that of the second embodiment, and the phase difference by the sampling is corrected.

## Fourth Embodiment

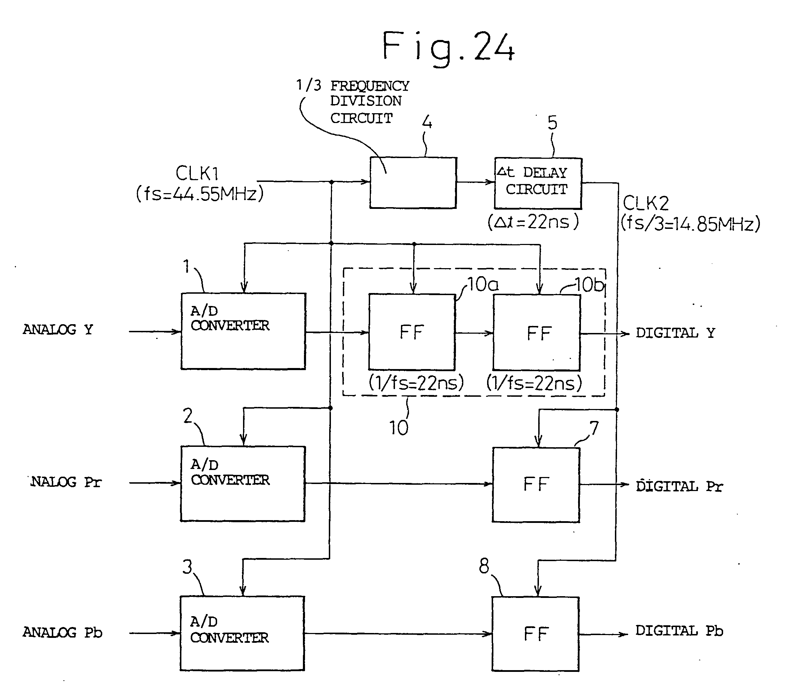

Figure 24 is a diagram showing a fourth embodiment of a component signal sampling circuit according to the invention. Input signals are the same as those of the first embodiment except that the sampling frequency fs is 44.55 MHz and n = 3.

In the figure, 4 denotes a 1/3 frequency division circuit for frequency dividing a clock CLK1 having a sampling frequency of 44.55 MHz, by 3; 5 denotes a $\Delta t$ delay circuit provided at the output side of the 1/3 frequency division circuit 4, for delaying the output phase by $\Delta t$ and for outputting a clock CLK2 (14.85 MHz); 10 denotes a phase delay circuit comprising a flip-flop FF10a provided at the output side of the A/D converter 1 for delaying the phase of the output of the A/D converter 1 by 1/fs in order to output the digitized Y signal by delaying the output phase by $(n+1)/(2fs)$, i.e., $2/fs$ and a flip-flop FF10b for delaying the phase of the output of the flip-flop FF10a further by 1/fs. The other constitutions are the same as those of the second embodiment shown in Fig. 16, and accordingly the explanation is abbreviated.

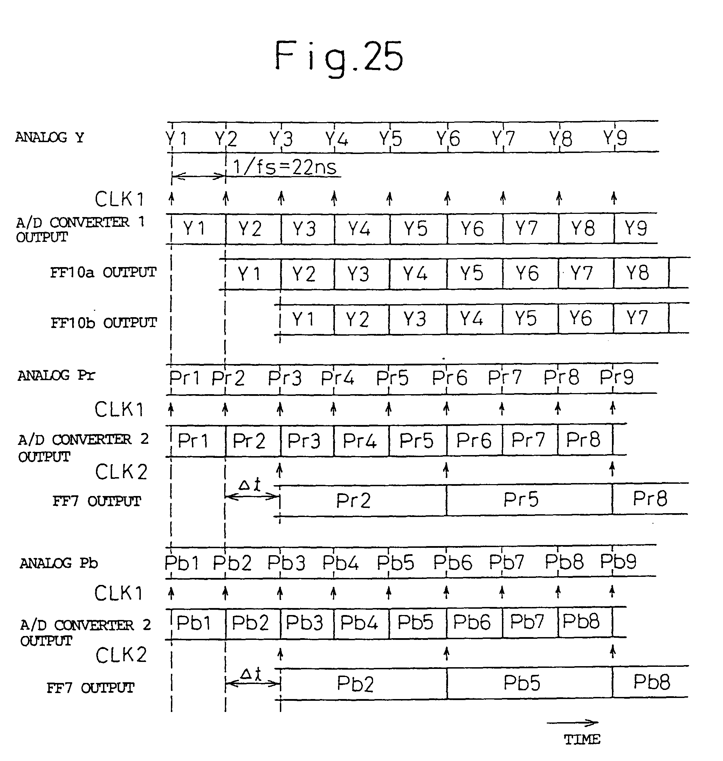

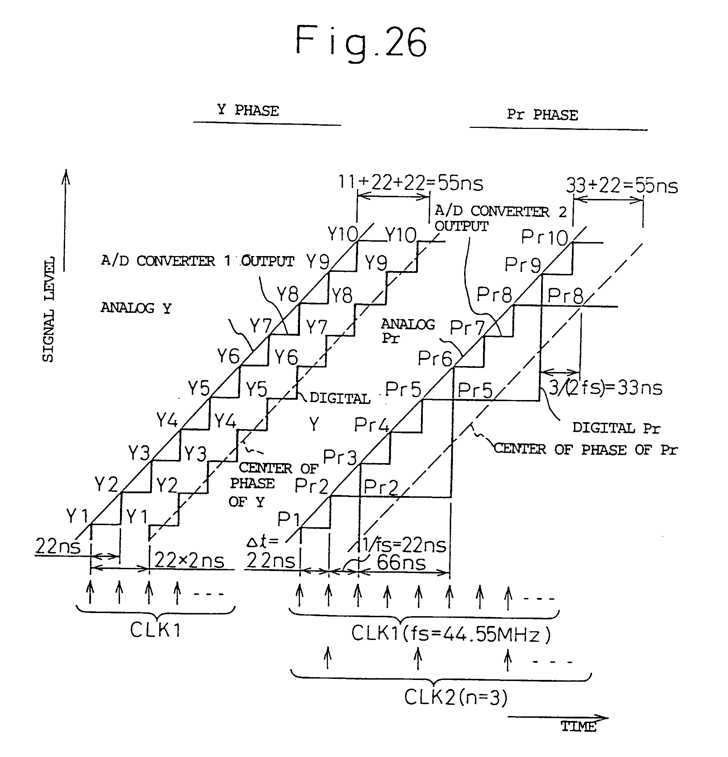

An operation, in this case, is explained with reference to an operation timing chart shown in Fig. 25, a diagram showing a relationship among phases of the sampling digital data shown in Fig. 26, and the second embodiment.

The Y signal input is directly sampled by the clock CLK1 in the A/D converter 1 without the $\Delta t$ delay circuit 5, further the phase is delayed by $1/fs = 22ns$ by the flip-flops FF10a and 10b, respectively, and the stepwise digitized Y signal output which comprises signal levels $Y_1$, $Y_2$, $Y_3$, ..., as shown in the figure, is obtained.

A Pr signal input is sampled by the clock CLK1 in an A/D converter 2 the same as the second embodiment, and the stepwise digital data output, which comprises signal levels $Pr_1$, $Pr_2$, $Pr_3$, $Pr_4$, $Pr_5$, ..., as shown in the figure, is obtained. Further, when they are, sub-sampled by the clock CLK2 in the flip-flop FF7, the phase is delayed by one time slot of the clock CLK1, i. e., $1/fs = 22ns$, and the stepwise digitized Pr signal output, which comprises signal levels $Pr_2$, $Pr_5$, $Pr_8$, ..., as shown in the figure, can be obtained.

Both the center of phases of the digitized Y signal output and the digitized Pr signal output, in this case, becomes $(n+2)/(2fs) = 55ns$ and the phase difference by the sampling is corrected.

## Fifth Embodiment

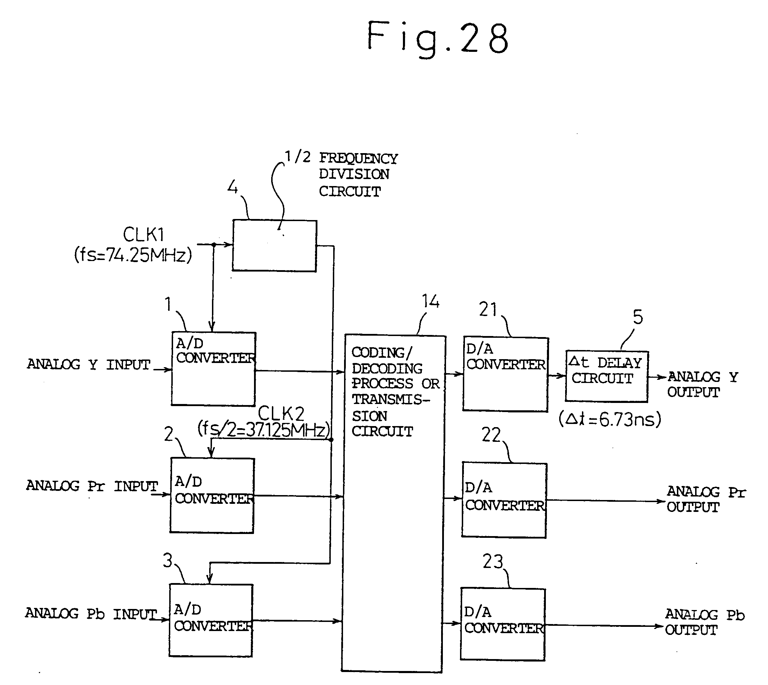

Figure 28 is a diagram showing a fifth embodiment of a component signal sampling and reproducing circuit according to the invention. The conditions of input signals, a sampling frequency fs, and an integer n are the same as those of the first embodiments shown in Fig. 12.

In the figure, 14 denotes a coding/decoding process or transmission circuit provided at the output sides of A/D converters 1 to 3 for delaying output phases by time T; 21 to 23 denote D/A converters provided at the output of the coding/decoding process or transmission circuit 14, for converting digital data to analog signals Y, Pr, and Pb; and since the other constitutions are the same as those of the first embodiment shown in Fig. 12, the explanation thereof is abbreviated.

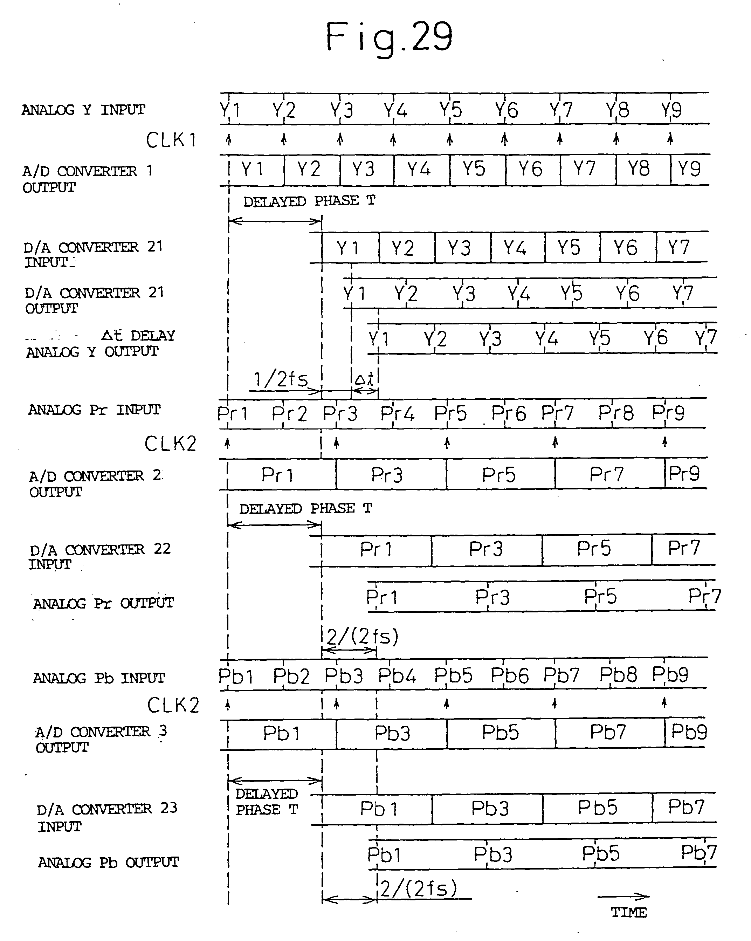

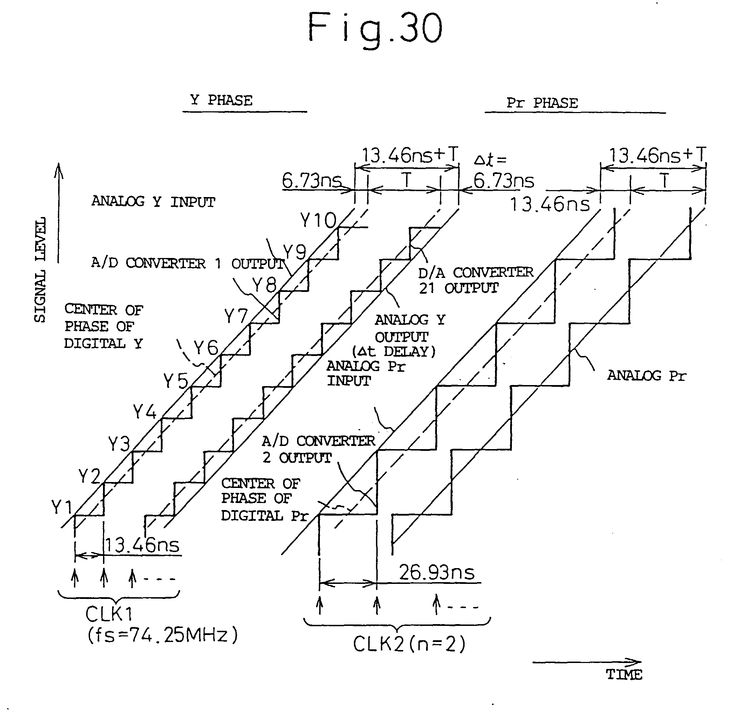

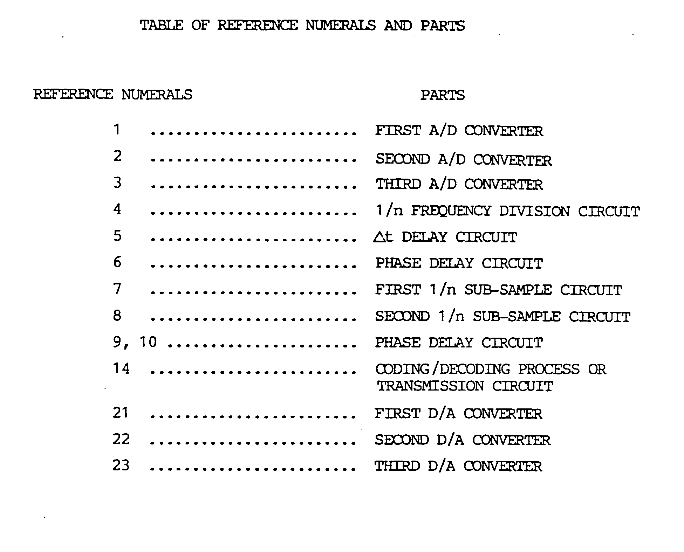

An operation in this case is explained with reference to a timing chart shown in Fig. 29, a diagram showing a relationship among phases of the sampling digital data shown in Fig. 30, and the first embodiment.

A Y signal input is processed the same as the first embodiment, sampled by the clock CLK1 in the A/D converter 1, and a stepwise digitized Y signal comprising signal levels $Y_1$, $Y_2$, $Y_3$, ..., as shown in the figure, is obtained, delayed in the phase by a constant time T in the coding process or transmission circuit 14, converted from digital data to analog data by the D/A converter 21, and delayed in phase by time $\Delta t$ by the $\Delta t$ delay circuit 5 and reproduced.

A Pr signal input is sampled by a clock CLK2 in the A/D converter 2, and a stepwise digitized Pr signal comprising signal levels $Pr_1$, $Pr_3$, $Pr_5$, ..., as shown in the figure is obtained, the obtained signal is delayed in the phase by a constant time T in the coding/decoding process or transmission circuit 14, converted from digital data to analog data by the D/A converter 22, and reproduced.

In this case, both the phase delays of the Y signal output and the Pr signal output are $1/fs + T = 13.64ns + T$, and the phase difference by the sampling is corrected.

In addition, in this embodiment, the $\Delta t$ phase delay circuit 5 may be provided between the D/A converter 21 and the coding/decoding process or transmission circuit 14 instead of being provided at the input side of the A/D converter 1, and the phase difference, and the output phase of the component may be corrected prior to the above.

As explained above, by using the component signal sampling circuit according to this invention, since the circuit is constituted so that a sampling phase is preliminarily shifted to sample by phase difference $\Delta t = (n-1)/(2fs)$, which generates when sampling a plurality of component signals by respective different sampling frequencies, the phase difference after sampling is corrected, a high resolution, of which the original signal has or sharpness at the edge portion, can be maintained and a clear image is obtained. As a result, improved picture quality of a high efficiency coding unit or image signal processing unit can be realized.

**Claims**

1. A component signal sampling circuit comprising:

    a first A/D converter (1) for sampling a first analog component signal ($I_1$) by a clock having a sampling frequency fs and for generating a first digital data ($0_1$);
    a 1/n frequency division circuit (4) for frequency dividing the clock of the sampling frequency fs by n, n being a positive integer other than 1;
    a second A/D converter (2) for sampling a second analog component signal ($I_2$) having the same phase as the first analog component signal ($I_1$) by an output clock fs/n from the 1/n frequency division circuit (4) and for generating a second digital data ($O_2$); and
    a $\Delta t$ delay circuit (5) for delaying a phase of the first analog component signal ($I_1$) by a time $\Delta t = (n-1)/(2fs)$ at the input side of the first A/D converter (1).

2. A component signal sampling circuit as set forth in claim 1, further comprising a third A/D converter (3) for sampling a third analog component signal ($I_3$) having the same phase as the first and second analog component signals ($I_1$, $I_2$) by the output clock fs/n from the 1/n frequency division circuit (4) and for generating third digital data ($O_3$).

3. A component signal sampling circuit as set forth in claim 1, wherein

    said second analog component signal ($I_2$) having the same phase as the first analog component signal ($I_1$) is sampled by said second A/D converter (2) by the clock of the sampling frequency fs; and
    said component signal sampling circuit further comprises:
    a phase delay circuit (6) for delaying an output phase of the first A/D converter (1) by 1/fs at the output side of the first A/D converter (1) and for outputting the first digital data ($O_1$); and
    a first 1/n sub-sampling circuit (7) for sub-sampling an output of the second A/D converter (2) by said output clock fs/n from the 1/n frequency division circuit (4) and for generating the second digital data ($O_2$).

4. A component signal sampling circuit as set forth in claim 2 and 3, wherein

    said third analog component signal ($I_3$) having the same phase as the first and second analog component signals ($I_1$, $I_2$) is sampled by said third A/D converter (3) by the clock of the sampling frequency fs; and
    said component signal sampling circuit further comprises:
    a second 1/n sub-sampling circuit (8) for sub-sampling an output of the third A/D converter (3) by the output clock fs/n from the 1/n frequency division circuit (4) and for generating third digital data ($O_3$).

5. A component signal sampling circuit comprising:

    a first A/D converter (1) for sampling a first analog component signal ($I_1$) by a clock of a sampling frequency fs and for generating first digital data;
    a $\Delta t$ delay circuit (5) for delaying the clock of the sampling frequency fs by a time $\Delta t = (n-1)/(2fs)$;
    a 1/n frequency division circuit (4) for frequency dividing an output of the $\Delta t$ delay circuit (5) by n, n being a positive integer other than 1);
    a second A/D converter (2) for sampling a second analog component signal ($I_2$) having the

same phase as the first analog component signal ($I_1$) by an output from the $\Delta t$ delay circuit (5) and for generating second digital data;

a phase delay circuit (9) for delaying an output phase by (n-1)/(2fs) at the output side of the first A/D converter (1);

a phase delay circuit (6) for delaying an output of the phase delay circuit (9) by 1/fs and for outputting the first digital data $O_1$; and

a first 1/n sub-sampling circuit (7) for sub-sampling an output of the second A/D converter (2) by an output clock from the 1/n frequency division circuit (4) and for generating the second digital data ($O_2$).

6. A component signal sampling circuit as set forth in claim 5, further comprising:

a third A/D converter (3) for sampling a third analog component signal ($I_3$) having the same phase as the first and second analog component signals ($I_1$, $I_2$) by the clock of the sampling frequency fs delayed in phase by $\Delta t = (n-1)/(2fs)$ by the $\Delta t$ delay circuit (5); and

a second 1/n sub-sampling circuit (8) for sub-sampling an output of the third A/D converter (3) by said output clock fs/n of the 1/n frequency division circuit (4) and for generating third digital data ($O_3$).

7. A component signal sampling circuit comprising:

a first A/D converter (1) for sampling a first analog component signal ($I_1$) by a clock of a sampling frequency fs and for generating first digital data;

a 1/n frequency division circuit (4) for frequency dividing the clock of the sampling frequency fs by n, n being a positive integer other than 1;

a $\Delta t$ delay circuit (5) for delaying a phase of an output clock fs/n of the 1/n frequency division circuit (4) by $\Delta t = (n-1)/(2fs)$;

a phase delay circuit (10) for delaying an output phase of the first A/D converter (1) by (n+1)/(2fs) at the output side of the first A/D converter (1) and for outputting first digital data ($O_1$);

a second A/D converter (2) for sampling a second analog component signal ($I_2$) having the same phase as the first analog component signal ($I_1$) by the clock of the sampling frequency fs and for generating second digital data; and

a first 1/n sub-sampling circuit (7) for sub-sampling an output of the second A/D converter (2) by an output clock fs/n from the $\Delta t$ delay circuit (5) and for generating second digital data ($O_2$).

8. A component signal sampling circuit as set forth in claim 7, further comprising:

a third A/D converter (3) for sampling a third analog component signal ($I_3$) having the same phase as the first and second analog component signals ($I_1$, $I_2$) by the clock of the sampling frequency (fs); and

a second 1/n sub-sampling circuit (8) for sub-sampling an output of the third A/D converter (3) by the output clock fs/n delayed in phase by $\Delta t$ through the $\Delta t$ delay circuit (5), and for generating third digital data ($O_3$).

9. A component signal sampling and reproducing circuit comprising:

a first A/D converter (1) for sampling a first analog component signal ($I_1$) by a clock of a sampling frequency fs and for generating first digital data;

a 1/n frequency division circuit (4) for frequency dividing the clock of the sampling frequency fs by n, n being a positive integer other than 1;

a second A/D converter (2) for sampling a second analog component signal ($I_2$) having the same phase as the first analog component signal ($I_1$) by an output clock fs/n from the 1/n frequency division circuit (4) and for generating second digital data;

a first D/A converter (21) receiving an output of the first A/D converter (1) through a coding/decoding process or transmission circuit (14) and for outputting an analog signal;

a $\Delta t$ delay circuit (5) receiving an output of the first D/A converter (21), for delaying in phase by a time $\Delta t = (n-1)/(2fs)$, and for outputting a first analog component signal ($AO_1$); and

a second D/A converter (22) receiving an output of the second A/D converter (2) through the coding/decoding process or transmission circuit (14), and for outputting a second analog component signal ($AO_2$).

10. A component signal sampling and reproducing circuit as set forth in claim 9, further comprising:

a third A/D converter (3) for sampling a third analog component signal ($I_3$) having the same phase as the first and second analog component signals ($I_1$, $I_2$) by the output clock fs/n from the 1/n frequency division circuit (4), and for generating third digital data; and

a third D/A converter (23) receiving an output of the third A/D converter (3) through the coding/decoding process or transmission circuit (14), and for outputting a third analog component signal ($AO_3$).

**Patentansprüche**

1. Teilsignal-Abtastschaltung, enthaltend:

    einen ersten A/D-Umsetzer (1) zum Abtasten eines ersten analogen Teilsignals ($I_1$) mit einem Takt einer Abtastfrequenz fs und zum Erzeugen erster digitalisierter Daten ($O_1$);

    eine 1/n Frequenzteilerschaltung (4) für die Frequenzteilung des Takts der Abtastfrequent fs um n, wobei n eine positive ganze Zahl ungleich 1 ist;

    einen zweiten A/D-Umsetzer (2) zum Abtasten eines zweiten analogen Teilsignals ($I_2$) mit der gleichen Phase wie das erste analoge Teilsignal ($I_1$) mit einem Ausgangstakt fs/n der 1/n Frequenzteilerschaltung (4) und zum Erzeugen zweiter digitalisierter Daten ($O_2$); und

    eine $\Delta$t-Verzögerungsschaltung (5) zum verzögern einer Phase des ersten analogen Teilsignals ($I_1$) um eine Zeit $\Delta t = (n-1)/(2fs)$ an der Eingangsseite des ersten A/D-Umsetzers (1).

2. Teilsignal-Abtastschaltung nach Anspruch 1, dadurch gekennzeichnet, daß sie ferner einen dritten A/D-Umsetzer (3) zum Abtasten eines dritten analogen Teilsignals ($I_3$) aufweist, daß dieselbe Phase wie die ersten und zweiten analogen Teilsignale ($I_1$, $I_2$) aufweist, und zwar mit dem Ausgangstakt fs/n der 1/n Frequenzteilerschaltung (4) und zum Erzeugen dritter digitaler Daten ($O_3$).

3. Teilsignal-Abastschaltung nach Anspruch 1, dadurch gekennzeichnet, daß

    das zweite analoge Teilsignal ($I_2$) mit der gleichen Phase wie das erste analoge Teilsignal ($I_1$) mit dem zweiten A/D-Umsetzer (2) und dem Takt der Abtastfrequenz fs abgetastet wird; und

    die Teilsignal-Abtastschaltung ferner enthält:

    eine Phasenverzögerungsschaltung (6) zum Verzögern einer Ausgangsphase des ersten A/D-Umsetzers (1) um 1/fs an der Ausgangsseite des ersten A/D-Umsetzers (1) und zum Ausgeben der ersten digitalen Daten ($O_1$); und

    eine erste 1/n Unterabtastungsschaltung (7) für die Unterabtastung eines Ausgangssignals des zweiten A/D-Umsetzers (2) mit dem Ausgangstakt fs/n der 1/n Frequenzteilerschaltung (4) und zum Erzeugen der zweiten digitalen Daten ($O_2$).

4. Teilsignal-Abtastschaltung nach Anspruch 2 und 3, dadurch gekennzeichnet, daß

    das dritte analoge Teilsignal ($I_3$) mit derselben Phase wie das erste und zweite analoge Teilsignal ($I_1$, $I_2$) von dem dritten A/D-Umsetzer (3) mit dem Takt der Abtastfrequenz fs abgetastet wird; und

    die Teilsignal-Abtastschaltung ferner enthält:

    eine zweite 1/n Unterabtastungsschaltung (8) für die Unterabtastung eines Ausgangssignals des dritten A/D-Umsetzers (3) mit dem Ausgangstakt fs/n der 1/n Frequenzteilerschaltung (4) und zum Erzeugen dritter digitaler Daten.

5. Teilsignal-Abtastschaltung, enthaltend:

    einen ersten A/D-Umsetzer (1) zum Abtasten eines ersten analogen Teilsignals ($I_1$) mit einem Takt einer Abtastfrequenz von fs und zum Erzeugen erster digitaler Daten;

    eine $\Delta$t-Verzögerungsschaltung (5) zum Verzögern des Takts der Abtastfrequenz fs um eine Zeit $\Delta t = (n-1)/(2fs)$;

    eine 1/n Frequenzteilerschaltung (4) für die Frequenzteilung eines Ausangssignals der $\Delta$t-Verzögerungsschaltung (5) um n, wobei n eine positive ganze Zahl ungleich 1 ist;

    einen zweiten A/D-Umsetzer (2) zum Abtasten eines zweiten analogen Teilsignals ($I_2$) mit derselben Phase wie das erste analoge Teilsignal ($I_1$) mit einem Ausgangssignal der $\Delta$t-Verzögerungsschaltung (5) und zum Erzeugen von zweiten digitalen Daten;

    eine Phasenverzögerungsschaltung (9) zum Verzögern einer Ausgangsphase um (n-1)/(2fs) an der Ausgangsseite des ersten A/D-Umsetzers (1);

    eine Phasenverzögerungsschaltung (6) zum Verzögern eines Ausgangssignals der Phasenverzögerungsschaltung (9) um 1/fs und zum Ausgeben der ersten digitalen Daten ($O_1$);

    eine erste 1/n Unterabtastungsschaltung (7) für die Unterabtastung eines Ausgangssignals des zweiten A/D-Umsetzers (2) um einen Ausgangstakt der 1/n Frequenzteilerschaltung (4) und zum Erzeugen der zweiten digitalen Daten ($O_2$).

6. Teilsignal-Abtastschaltung nach Anspruch 5, dadurch gekennzeichnet, daß sie weiter enthält:

einen dritten A/D-Umsetzer (3) zum Abtasten eine dritten analogen Teilsignals ($I_3$) mit derselben Phase wie das erste und zweite analoge Teilsignal ($I_1$, $I_2$) mit dem Takt der Abtastfrequenz fs und phasenverzögert um $\Delta t = (n-1)/(2fs)$ durch die $\Delta t$-Verzögerungsschaltungen (5); und

eine zweite 1/n Unterabtastungsschaltung (8) für das Unterabtasten eines Ausgangssignals des dritten A/D-Umsetzers (3) mit dem Ausgangtakt fs/n der 1/n Frequenzteilerschaltung (4) und zum Erzeugen der dritten digitalen Daten ($O_3$).

7.     Teilsignal-Abtastschaltung, enthaltend:

einen ersten A/D-Umsetzer (1) zum Abtasten eines ersten analogen Teilsignals ($I_1$) mit einem Takt einer Abtastfrequenz fs und zum Erzeugen erster digitaler Daten;

eine 1/n Frequenzteilerschaltung (f) für die Frequenzteilung des Takts der Abtastfrequenz fs um n, wobei n eine positive ganze Zahl ungleich 1 ist;

eine $\Delta t$-Verzögerungsschaltung (5) zum Verzögern einer Phase eines Ausgangstakts fs/n der 1/n Frequenzteilerschaltung (4) um $\Delta t = (n-1)/(2fs)$;

eine Phasenverzögerungsschaltung (10) zm Verzögern einer Ausgangsphase des ersten A/D-Umsetzers (1) um $(n+1)/(2fs)$ an der Ausgangsseite des ersten A/D-Umsetzers (1) und zum Ausgeben erster digitaler Daten ($O_1$);

einen zweiten A/D-Umsetzer (2) zum Abtasten eines zweiten analogen Teilsignals ($I_2$) mit der gleichen Phase wie das erste analoge Teilsignal ($I_1$) mit dem Takt der Abtastfrequenz fs und zum Erzeugen zweiter digitaler Daten; und

eine erste 1/n Unterabtastungsschaltung (7) für das Unterabtasten eines Ausgangssignals des zweiten A/D-Umsetzers (2) mit einem Ausgangtakt fs/n der $\Delta t$-Verzögerungsschaltung (5) und zum Erzeugen zweiter digitaler Daten ($O_2$).

8.     Teilsignal-Abtastschaltung nach Anspruch 7, dadurch gekennzeichnet, daß er ferner enthält:

einen dritten A/D-Umsetzer (3) zum Abtasten eines dritten analogen Teilsignals ($I_3$) mit der

gleichen Phase wie das erste und zweite analoge Teilsignal ($I_1$, $I_2$) mit dem Takt der Abtastfrequenz (fs); und

eine zweite 1/n Unterabtastungsschaltung (8) für das Unterabtasten eines Ausgangssignals des dritten A/D-Umsetzers (3) mit dem Ausgangtakt fs/n der in der Phase um $\Delta t$ um die $\Delta t$-Verzögerungsschaltung (5) verzögert ist, und zum Erzeugen dritter digitaler Daten ($O_3$).

9.     Teilsignal-Abtast- und -Wiedergewinnungsschaltung, enthaltend:

einen ersten A/D-Umsetzer (1) zum Abtasten eines ersten analogen Teilsignals ($I_1$) mit einem Takt einer Abtastfrequenz von fs und zum Erzeugen erster digialer Daten;

eine 1/n Frequenzteilerschaltung (4) zum Frequenzteilen des Takts der Abtstfrequenz fs um n, wobei n eine positive ganze Zahl ungleich 1 ist;

einen zweiten A/D-Umsetzer (2) zum Abtasten eines zweiten analogen Teilsignals ($I_2$) mit derselben Phase wie das erste analoge Teilsignal ($I_1$) mit einem Ausgangtakt fs/n der 1/n Frequenteilerschaltung (4) und zum Erzeugen von zweiten digitalen Daten;

einen ersten D/A-Umsetzer (21) zum Empfangen eines Ausgangssignals des ersten A/D-Umsetzers (1) über eine Kodier/Dekodier-Bearbeitungs- oder -Übertragungsschaltung (14) und zum Ausgeben eines analogen Signals;

eine $\Delta t$-Verzögerungsschaltung (5), die ein Ausgangssignal des ersten D/A-Umsetzers (21) empfängt, zum Verzögern der Phase um eine Zeit $\Delta t = (n-1)/(2fs)$ und zum Ausgeben eines ersten analogen Teilsignals ($AO_1$); und

einen zweiten D/A-Umsetzer (22) zum Empfangen eines Ausgangssignals des zweiten A/D-Umsetzers (2) über die Kodier/Dekodier-Bearbeitungs- oder -Wiedergewinnungsschaltung (14) und zum Ausgeben eines zweiten analogen Teilsignals ($AO_2$).

10.     Teilsignal-Abtast- und -Wiedergewinnungsschaltung nach Anspruch 9, dadurch gekennzeichnet daß die ferner enthält:

einen dritten A/D-Umsetzer (3) zum Abtasten eines dritten analogen Teilsignals ($I_3$) mit derselben Phase wie das erste und zweite analoge Teilsignal ($I_1$, $I_2$) mit dem Ausgangstakt fs/n der 1/n Frequenzteilerschaltung (4) und zum Erzeugen dritter digitaler Daten; und

einen dritten D/A-Umsetzer (22), der ein Ausgangssignal des dritten A/D-Umsetzers (3) über die Kodier/Dekodier-Bearbeitungs- oder -Wiedergewinnungsschaltung (14) empfängt, zum Ausgeben eines dritten analogen Teilsignals (AO$_3$).

**Revendications**

1. Circuit d'échantillonnage de composante de signal comportant :

un premier convertisseur analogique/numérique (1) pour échantillonner une première composante de signal analogique (I$_1$) par une horloge de fréquence d'échantillonnage fs et pour générer une première donnée numérique (O$_1$); un circuit diviseur de fréquence 1/n (4) pour diviser la fréquence de l'horloge de fréquence d'échantillonnage fs par n, n étant un entier positif différent de 1; un second convertisseur analogique/numérique (2) pour échantillonner une seconde composante de signal analogique (I$_2$) de même phase que la première composante de signal analogique (I$_1$) par une horloge de sortie fs/n provenant du circuit diviseur de fréquence 1/n (4) et pour générer une seconde donnée numérique (O$_2$); et un circuit de retard Δt (5) pour retarder la phase de la première composante de signal analogique (I$_1$) d'un temps Δt = (n-1)/(2fs) à l'entrée du premier convertisseur analogique/numérique (1).

2. Circuit d'échantillonnage de composante de signal selon la revendication 1, comportant en outre un troisième convertisseur analogique/numérique (3) pour échantillonner une troisième composante de signal analogique (I$_3$) de même phase que les première et seconde composantes de signal analogique (I$_1$, I$_2$) par l'horloge de sortie fs/n provenant du circuit diviseur de fréquence 1/n (4) et pour générer des troisièmes données numériques (O$_3$).

3. Circuit d'échantillonnage de composante de signal selon la revendication 1 dans lequel :

ladite seconde composante de signal analogique (I$_2$) de même phase que la première composante de signal analogique (I$_1$) est échantillonnée par ledit second convertisseur analogique/numérique (2) par l'horloge à la fréquence d'échantillonnage fs; et

ledit circuit d'échantillonnage de composante de signal comporte en outre :
un circuit de retard de phase (6) pour retarder une phase de sortie du premier convertisseur analogique/ numérique (1) de 1/fs à la sortie du premier convertisseur analogique/numérique (1) et pour délivrer les premières données numériques (O$_1$); et
un premier circuit de sous-échantillonnage 1/n (7) pour sous-échantillonner un signal de sortie du second convertisseur analogique/numérique (2) par ladite horloge de sortie fs/n provenant du circuit diviseur de fréquence 1/n (4) et pour générer les secondes données numériques (O$_2$).

4. Circuit d'échantillonnage de composante de signal selon les revendications 2 et 3, dans lequel

ladite troisième composante de signal analogique (I$_3$) de même phase que les première et seconde composantes de signal analogique (I$_1$, I$_2$) est échantillonnée par ledit troisième convertisseur analogique/numérique (3) par l'horloge de fréquence d'échantillonnage fs; et ledit circuit d'échantillonnage de composante de signal comporte en outre :
un second circuit de sous-échantillonnage 1/n (8) pour sous-échantillonner un signal de sortie du troisième convertisseur analogique/numérique (3) par l'horloge de sortie fs/n provenant du circuit diviseur de fréquence 1/n (4) et pour générer des troisièmes données numériques (O$_3$).

5. Circuit d'échantillonnage de composante de signal comportant :

un premier convertisseur analogique/numérique (1) pour échantillonner une première composante de signal analogique (I$_1$) par une horloge de fréquence d'échantillonnage fs et pour générer des premières données numériques; un circuit de retard Δt (5) pour retarder l'horloge de fréquence d'échantillonnage fs d'un temps Δt = (n-1)/(2fs); un circuit diviseur de fréquence 1/n (4) pour diviser la fréquence d'un signal de sortie du circuit de retard Δt (5) par n, n étant un entier positif différent de 1; un second convertisseur analogique/numérique (2) pour échantillonner une seconde composante de signal analogique (I$_2$) de même phase que la première composante de signal analogique (I$_1$) par un signal de sortie du circuit de retard Δt (5) et pour générer des secondes données numériques; un circuit de retard de phase (9) pour retarder une phase de sortie de $(n-1)/(2fs)$ à la sortie du premier convertisseur analogique/numérique (1);

un circuit de retard de phase (6) pour retarder un signal de sortie du circuit de retard de phase (9) de $1/fs$ et pour délivrer les premières données numériques ($O_1$); et

un premier circuit de sous-échantillonnage $1/n$ (7) pour sous-échantillonner un signal de sortie du second convertisseur analogique/numérique (2) par une horloge de sortie provenant du circuit diviseur de fréquence $1/n$ (4) et pour générer les secondes données numériques ($O_2$).

6. Circuit d'échantillonnage de composante de signal selon la revendication 5, comportant en outre :

un troisième convertisseur analogique/numérique (3) pour échantillonner une troisième composante de signal analogique ($I_3$) de même phase que les première et seconde composantes de signal analogique ($I_1$, $I_2$) par l'horloge de fréquence d'échantillonnage $fs$ retardé en phase de $\Delta t = (n-1)/(2fs)$ par le circuit de retard $\Delta t$ (5); et

un second circuit de sous-échantillonnage $1/n$ (8) pour sous-échantillonner un signal de sortie du troisième convertisseur analogique/numérique (3) par ladite horloge de sortie $fs/n$ du circuit diviseur de fréquence $1/n$ (4) et pour générer des troisièmes données numériques ($O_3$).

7. Circuit d'échantillonnage de composante de signal comportant :

un premier convertisseur analogique/numérique (1) pour échantillonner une première composante de signal analogique ($I_1$) par une horloge de fréquence d'échantillonnage $fs$ et pour générer des premières données numériques;

un circuit diviseur de fréquence $1/n$ (4) pour diviser en fréquence l'horloge de fréquence d'échantillonnage $fs$ par n, n étant un entier positif différent de 1;

un circuit de retard $\Delta t$ (5) pour retarder une phase d'une horloge de sortie $fs/n$ du circuit diviseur de fréquence $1/n$ (4) par $\Delta t = (n-1)/(2fs)$;

un circuit de retard de phase (10) pour retarder une phase de sortie du premier convertisseur analogique/numérique (1) de $(n+1)/(2fs)$ à la sortie du premier convertisseur analogique/numérique (1) et pour délivrer des premières données numériques ($O_1$);

un second convertisseur analogique/numérique (2) pour échantillonner une seconde composante de signal analogique ($I_2$) de même phase que la première composante de signal analogique ($I_1$) par l'horloge à la fréquence d'échantillonnage $fs$ et pour générer des secondes données numériques; et

un premier circuit de sous-échantillonnage $1/n$ (7) pour sous-échantillonner un signal de sortie du second convertisseur analogique/numérique (2) par une horloge de sortie $fs/n$ provenant du circuit de retard $\Delta t$ (5) et pour générer des secondes données numériques ($O_2$).

8. Circuit d'échantillonnage de composante de signal selon la revendication 7, comportant en outre :

un troisième convertisseur analogique/numérique (3) pour échantillonner une troisième composante de signal analogique ($I_3$) de même phase que les première et seconde composantes de signal analogique ($I_1$, $I_2$) par l'horloge à la fréquence d'échantillonnage $fs$; et

un second circuit de sous-échantillonnage $1/n$ (8) pour sous-échantillonner un signal de sortie du troisième convertisseur analogique/numérique (3) par l'horloge de sortie $fs/n$ retardée en phase de $\Delta t$ par le circuit de retard $\Delta t$ (5), et pour générer des troisièmes données numériques ($O_3$).

9. Circuit d'échantillonnage et de reproduction d'une composante de signal comportant :

un premier convertisseur analogique/numérique (1) pour échantillonner une première composante de signal analogique ($I_1$) par une horloge de fréquence d'échantillonnage $fs$ et pour générer des premières données numériques;

un circuit diviseur de fréquence $1/n$ (4) pour diviser en fréquence l'horloge de fréquence d'échantillonnage $fs$ par n, n étant un entier positif différent de 1;

un second convertisseur analogique/numérique (2) pour échantillonner une seconde composante de signal analogique ($I_2$) de même phase que la première composante de signal analogique ($I_1$) par une horloge de sortie $fs/n$ provenant du circuit diviseur de fréquence $1/n$ (4) et pour générer des secondes données numériques;

un premier convertisseur numérique/analogique (21) recevant un signal de sortie du premier convertisseur analogique/numérique (1) par l'intermédiaire d'un circuit de traitement de codage/décodage ou de transmission (14) et pour délivrer un signal analogique;

un circuit de retard $\Delta t$ (5) recevant un signal de sortie du premier convertisseur numérique/analogique (21), pour retarder en phase d'un temps $\Delta t = (n-1)/(2fs)$, et pour délivrer une première composante de signal analogique ($AO_1$); et

un second convertisseur numérique/analogique (22) recevant un signal de sortie du second convertisseur analogique/numérique (2) par l'intermédiaire du circuit de traitement de codage/décodage ou de transmission (14), et pour délivrer une seconde composante de signal analogique ($AO_2$).

10. Circuit d'échantillonnage et de reproduction d'une composante de signal selon la revendication 9, comportant en outre :

un troisième convertisseur analogique/numérique (3) pour échantillonner une troisième composante de signal analogique ($I_3$) de même phase que les première et seconde composantes de signal analogique ($I_1$, $I_2$) par l'horloge de sortie fs/n provenant du circuit diviseur de fréquence 1/n (4), et pour générer les troisièmes données numériques; et
un troisième convertisseur numérique/analogique (23) recevant un signal de sortie du troisième convertisseur analogique/numérique (3) par l'intermédiaire du circuit de traitement de codage/décodage ou de transmission (14), et pour délivrer une troisième composante de signal analogique ($AO_3$).

# Fig.1

# Fig.2

Y PHASE

Pr(Pb) PHASE

SIGNAL LEVEL

ANALOG Y

Y10
Y9
Y8
Y7
Y6
Y5
Y4
Y3
Y2
Y1

6.73ns

DIGITAL Y

CENTER OF
PHASE

13.46ns

↑ ↑ ↑ ↑ ↑ - - -

CLK1
(fs=74.25MHz)

ANALOG
Pr(Pb)

Pr9
(Pb9)

Pr7
(Pb7)

Pr5
(Pb5)

Pr3
(Pb3)

Pr1
(Pb1)

13.46ns

DIGITAL Pr(Pb)

CENTER OF PHASE

26.93ns

↑ ↑ ↑ ↑ ↑ ↑ ↑ - - -

↑ ↑CLK1↑ ↑ - - -

CLK2(n=2)

TIME

# Fig.3

```
|← →|  1/fs=13.46ns(fs=74.25MHz)
```

| Y1 | Y2 | Y3 | Y4 | Y5 | Y6 | Y7 | Y8 | Y9 | Y10 | - - - |
|----|----|----|----|----|----|----|----|----|-----|-------|
| Pr1 | | Pr3 | | Pr5 | | Pr7 | | Pr9 | | - - - |
| Pb1 | | Pb3 | | Pb5 | | Pb7 | | Pb9 | | - - - |

```
|←           →|  1/(fs/2)=26.93ns(fs=74.25MHz)
```

——→ TIME

# Fig.4

1/3 FREQUENCY
DIVISION
CIRCUIT

4

CLK1
(fs=44.55MHz)

1

A/D
CONVERTER

ANALOG Y

DIGITAL Y

CLK2
(fs/3=14.85MHz)

2

A/D
CONVERTER

ANALOG Pr

DIGITAL Pr

3

A/D
CONVERTER

ANALOG Pb

DIGITAL Pb

# Fig.5

Y PHASE                                    Pr(Pb) PHASE

# Fig.6

1/fs=22ns(fs=44.55MHz)

| Y1 | Y2 | Y3 | Y4 | Y5 | Y6 | Y7 | Y8 | Y9 | Y10 - - - |
|------|------|------|------|------|------|------|------|------|------|
| Pr1 | | | Pr4 | | | Pr7 | | | Pr10- - - |
| Pb1 | | | Pb4 | | | Pb7 | | | Pb10- - - |

1/(fs/3)=66ns(fs=44.55MHz)

TIME ⟶

# Fig.7

1/2 FREQUENCY
DIVISION
CIRCUIT

4

CLK1
(fs=74.25MHz)

1

A/D
CONVERTER

ANALOG Y
INPUT

CLK2
(fs/2=37.125MHz)

2

A/D
CONVERTER

ANALOG Pr
INPUT

3

A/D
CONVERTER

ANALOG Pb
INPUT

14

CODING/
DECODING
PROCESS OR
TRANSMISSION
CIRCUIT

21

D/A
CONVERTER

ANALOG
Y OUTPUT

22

D/A
CONVERTER

ANALOG Pr
OUTPUT

23

D/A
CONVERTER

ANALOG
Pb OUTPUT

# Fig.8

# Fig.9

TOTAL PHASE DELAY : $\dfrac{n-1}{2fs} + \dfrac{1}{2fs} = \dfrac{n}{2fs}$

PHASE DELAY $\dfrac{n}{2fs}$

$\Delta t = \dfrac{n-1}{2fs}$

$\dfrac{1}{2fs}$

SIGNAL LEVEL

$\Delta t = \dfrac{n-1}{2fs}$

$I_1$

$O_1$

DELAYED $I_1$

CENTER OF PHASE OF $O_1$

$I_2$

$O_2$

CENTER OF PHASE OF $O_2$

$1/fs$

CLOCK OF fs

CLOCK OF fs/n

TIME

# Fig.10

TOTAL PHASE DELAY : $\dfrac{1}{2fs} + T + \dfrac{n-1}{2fs} = \dfrac{n}{2fs} + T$

TOTAL PHASE DELAY

$\dfrac{1}{2fs} + T$

$\dfrac{1}{2fs}$

$T$

$\Delta t = \dfrac{n-1}{2fs}$

$\dfrac{n}{2fs}$

$T$

SIGNAL LEVEL

$I_1$

$O_1$

CENTER OF PHASE OF $O_1$

$AO_1$

$I_2$

$AO_2$

$O_2$

CENTER OF PHASE OF $O_2$

$\dfrac{1}{fs}$

CLOCK OF fs

$\dfrac{n}{fs}$

CLOCK OF fs/n

TIME

# Fig.11

# Fig.12

CLK1
(fs=74.25MHz)

4
1/2 FREQUENCY
DIVISION
CIRACUIT

5

1

| $\Delta t$ DELAY CIRCUIT |
|---|

ANALOG Y →

($\Delta t$=6.73ns)

A/D CONVERTER → DIGITAL Y

CLK2
(fs/2=37.125MHz)

2

ANALOG Pr →

A/D CONVERTER → DIGITAL Pr

3

ANALOG Pb →

A/D CONVERTER → DIGITAL Pb

# Fig.13

| ANALOG Y | Y1 | Y2 | Y3 | Y4 | Y5 | Y6 | Y7 | Y8 | Y9 |

$\Delta t$

$1/fs = 13.46ns$

| $\Delta t$ DELAY | Y1 | Y2 | Y3 | Y4 | Y5 | Y6 | Y7 | Y8 | Y9 |

CLK1

| DIGITAL Y | Y1 | Y2 | Y3 | Y4 | Y5 | Y6 | Y7 | Y8 | Y9 |

| ANALOG Pr | Pr1 | Pr2 | Pr3 | Pr4 | Pr5 | Pr6 | Pr7 | Pr8 | Pr9 |

CLK2

| DIGITAL Pr | Pr1.5 | Pr3.5 | Pr5.5 | Pr7.5 |

| ANALOG Pb | Pb1 | Pb2 | Pb3 | Pb4 | Pb5 | Pb6 | Pb7 | Pb8 | Pb9 |

CLK2

| DIGITAL Pb | Pb1.5 | Pb3.5 | Pb5.5 | Pb7.5 |

TIME

# Fig.14

# Fig.15

CLOCK (fs)

4 1/n FREQUENCY DIVISION CIRCUIT

(fs/n)

5

$I_1$

$\Delta t$ DELAY CIRCUIT

$\left(\Delta t = \dfrac{n-1}{2fs}\right)$

1 FIRST A/D CONVERTER

6 PHASE DELAY CIRCUIT

$O_1$

(1/fs)

2 SECOND A/D CONVERTER

$I_2$

7 FIRST 1/n SUB-SAMPLING CIRCUIT

$O_2$

3 THIRD A/D CONVERTER

$I_3$

8 SECOND 1/n SUB-SAMPLING CIRCUIT

$O_3$

# Fig.16

CLK1
(fs=74.25MHz)

4   1/2 FREQUENCY
DIVISION
CIRCUIT

5

ANALOG Y

Δt
DELAY
CIRCUIT

(Δt =6.73ns)

1

A/D
CONVERTER

6

F F

DIGITAL Y

(1/fs=13.46ns)

CLK2
(fs/2=37.125MHz)

2

ANALOG Pr

A/D
CONVERTER

7

F F

DIGITAL Pr

3

ANALOG Pb

A/D
CONVERTER

8

F F

DIGITAL Pb

# F i g.17

# Fig.18

# Fig.19

CLOCK (fs)

5 → $\Delta t$ DELAY CIRCUIT $\left(\Delta t = \dfrac{n-1}{2fs}\right)$

4 → 1/n FREQUENCY DIVISION CIRCUIT fs/n

1 → FIRST A/D CONVERTER

$I_1$

9 → PHASE DELAY CIRCUIT $\left(\dfrac{n-1}{2fs}\right)$

6 → PHASE DELAY CIRCUIT (1/fs) → $O_1$

2 → SECOND A/D CONVERTER

$I_2$

7 → FIRST 1/n SUB-SAMPLING CIRCUIT → $O_2$

3 → THIRD A/D CONVERTER

$I_3$

8 → SECOND 1/n SUB-SAMPLING CIRCUIT → $O_3$

# Fig.20

1/2 FREQUENCY
DIVISION
CIRCUIT

CLK1
(fs=74.25MHz)

5
Δt DELAY
CIRCUIT

(Δt=6.73ns)

CLK2

4

CLK3
(fs/2=37.125MHz)

1
A/D
CONVERTER

ANALOG Y

9
F F

6
F F

DIGITAL Y

(1/2fs=6.73ns)(1/fs=13.46ns)

2
A/D
CONVERTER

ANALOG Pr

F F

DIGITAL Pr

7

3
A/D
CONVERTER

ANALOG Pb

F F

DIGITAL Pb

8

# Fig.21

ANALOG Y | Y1 Y2 Y3 Y4 Y5 Y6 Y7 Y8 Y9

1/fs = 13.46ns

CLK1

A/D CONVERTER 1 OUTPUT | Y1 Y2 Y3 Y4 Y5 Y6 Y7 Y8 Y9

Δt

CLK2

FF 9 OUTPUT | Y1 Y2 Y3 Y4 Y5 Y6 Y7 Y8 Y9

FF6 OUTPUT | Y1 Y2 Y3 Y4 Y5 Y6 Y7 Y8

ANALOG Pr | Pr1 Pr2 Pr3 Pr4 Pr5 Pr6 Pr7 Pr8 Pr9

CLK1

A/D CONVERTER 2 OUTPUT | Pr1.5 Pr2.5 Pr3.5 Pr4.5 Pr5.5 Pr6.5 Pr7.5 Pr8.5

CLK3

FF 7 OUTPUT | Pr1.5 Pr3.5 Pr5.5 Pr7.5

ANALOG Pb | Pb1 Pb2 Pb3 Pb4 Pb5 Pb6 Pb7 Pb8 Pb9

CLK1

A/D CONVERTER 3 OUTPUT | Pb1.5 Pb2.5 Pb3.5 Pb4.5 Pb5.5 Pb6.5 Pb7.5 Pb8.5

CLK3

FF 8 OUTPUT | Pb1.5 Pb3.5 Pb5.5 Pb7.5

TIME

36

# Fig.22

Y PHASE            Pr PHASE

# Fig.23

# Fig.24

1/3 FREQUENCY DIVISION CIRCUIT

4

5

CLK1
(fs=44.55MHz)

Δt DELAY CIRCUIT

(Δt=22ns)

CLK2
(fs/3=14.85MHz)

10a          10b

1

A/D CONVERTER

ANALOG Y

FF          FF

DIGITAL Y

(1/fs=22ns)    (1/fs=22ns)

10

2

A/D CONVERTER

NALOG Pr

FF

7

DIGITAL Pr

3

A/D CONVERTER

ANALOG Pb

8

FF

DIGITAL Pb

# Fig.25

ANALOG Y    Y1  Y2  Y3  Y4  Y5  Y6  Y7  Y8  Y9

1/fs=22ns

CLK1

A/D CONVERTER 1 OUTPUT    Y1  Y2  Y3  Y4  Y5  Y6  Y7  Y8  Y9

FF10a OUTPUT    Y1  Y2  Y3  Y4  Y5  Y6  Y7  Y8

FF10b OUTPUT    Y1  Y2  Y3  Y4  Y5  Y6  Y7

ANALOG Pr    Pr1 Pr2 Pr3 Pr4 Pr5 Pr6 Pr7 Pr8 Pr9

CLK1

A/D CONVERTER 2 OUTPUT    Pr1 Pr2 Pr3 Pr4 Pr5 Pr6 Pr7 Pr8

CLK2

FF7 OUTPUT    $\Delta t$    Pr2    Pr5    Pr8

ANALOG Pb    Pb1 Pb2 Pb3 Pb4 Pb5 Pb6 Pb7 Pb8 Pb9

CLK1

A/D CONVERTER 2 OUTPUT    Pb1 Pb2 Pb3 Pb4 Pb5 Pb6 Pb7 Pb8

CLK2

FF7 OUTPUT    $\Delta t$    Pb2    Pb5    Pb8

TIME

40

# Fig.26

# Fig.27

CLOCK(fs)

4 — 1/n FREQUENCY DIVISION CIRCUIT

1 — FIRST A/D CONVERTER

$I_1$ →

2 — SECOND A/D CONVERTER

$I_2$ →

fs/n

3 — THIRD A/D CONVERTER

$I_3$ →

14 — CODING/ DECODING PROCESS OR TRANSMISSION CIRCUIT

21 — FIRST D/A CONVERTER

5 — Δt DELAY CIRCUIT

→ $AO_1$

22 — SECOND D/A CONVERTER

→ $AO_2$

23 — THIRD D/A CONVERTER

→ $AO_3$

# Fig.28

1/2 FREQUENCY
DIVISION
CIRCUIT

4

CLK1
(fs=74.25MHz)

1

A/D
CONVERTER

ANALOG Y INPUT

CLK2
(fs/2=37.125MHz)

2

A/D
CONVERTER

ANALOG Pr INPUT

3

A/D
CONVERTER

ANALOG Pb INPUT

14

CODING/
DECODING
PROCESS OR
TRANSMIS-
SION
CIRCUIT

21

D/A
CONVERTER

22

D/A
CONVERTER

23

D/A
CONVERTER

5

Δt DELAY
CIRCUIT

(Δt=6.73ns)

ANALOG Y
OUTPUT

ANALOG Pr
OUTPUT

ANALOG Pb
OUTPUT

# Fig.29

ANALOG Y INPUT | Y1 | Y2 | Y3 | Y4 | Y5 | Y6 | Y7 | Y8 | Y9

CLK1

A/D CONVERTER 1 OUTPUT | Y1 | Y2 | Y3 | Y4 | Y5 | Y6 | Y7 | Y8 | Y9

DELAYED PHASE T

D/A CONVERTER 21 INPUT | Y1 | Y2 | Y3 | Y4 | Y5 | Y6 | Y7

D/A CONVERTER 21 OUTPUT | Y1 | Y2 | Y3 | Y4 | Y5 | Y6 | Y7

Δt DELAY ANALOG Y OUTPUT | Y1 | Y2 | Y3 | Y4 | Y5 | Y6 | Y7

1/2fs | Δt

ANALOG Pr INPUT | Pr1 | Pr2 | Pr3 | Pr4 | Pr5 | Pr6 | Pr7 | Pr8 | Pr9

CLK2

A/D CONVERTER 2 OUTPUT | Pr1 | Pr3 | Pr5 | Pr7 | Pr9

DELAYED PHASE T

D/A CONVERTER 22 INPUT | Pr1 | Pr3 | Pr5 | Pr7

ANALOG Pr OUTPUT | Pr1 | Pr3 | Pr5 | Pr7

2/(2fs)

ANALOG Pb INPUT | Pb1 | Pb2 | Pb3 | Pb4 | Pb5 | Pb6 | Pb7 | Pb8 | Pb9

CLK2

A/D CONVERTER 3 OUTPUT | Pb1 | Pb3 | Pb5 | Pb7 | Pb9

DELAYED PHASE T

D/A CONVERTER 23 INPUT | Pb1 | Pb3 | Pb5 | Pb7

ANALOG Pb OUTPUT | Pb1 | Pb3 | Pb5 | Pb7

2/(2fs)

TIME

# Fig.30

TABLE OF REFERENCE NUMERALS AND PARTS

| REFERENCE NUMERALS | PARTS |
|---|---|
| 1 | FIRST A/D CONVERTER |
| 2 | SECOND A/D CONVERTER |
| 3 | THIRD A/D CONVERTER |
| 4 | 1/n FREQUENCY DIVISION CIRCUIT |
| 5 | $\Delta t$ DELAY CIRCUIT |
| 6 | PHASE DELAY CIRCUIT |
| 7 | FIRST 1/n SUB-SAMPLE CIRCUIT |
| 8 | SECOND 1/n SUB-SAMPLE CIRCUIT |
| 9, 10 | PHASE DELAY CIRCUIT |
| 14 | CODING/DECODING PROCESS OR TRANSMISSION CIRCUIT |
| 21 | FIRST D/A CONVERTER |
| 22 | SECOND D/A CONVERTER |
| 23 | THIRD D/A CONVERTER |